(19) Europäisches Patentamt
European Patent Office
Office européen des brevets

(11) **EP 2 895 006 B1**

(12) **EUROPEAN PATENT SPECIFICATION**

(45) Date of publication and mention
of the grant of the patent:
**06.07.2016 Bulletin 2016/27**

(51) Int Cl.:
*A23K 10/00* *(2016.01)*     *A23K 10/16* *(2016.01)*
*A23K 10/18* *(2016.01)*

(21) Application number: **13789509.0**

(22) Date of filing: **29.10.2013**

(86) International application number:
**PCT/EP2013/072617**

(87) International publication number:
**WO 2014/067950 (08.05.2014 Gazette 2014/19)**

(54) **USE OF PROTEIN HYDROLYSATES AND NUCLEOTIDES FOR ENHANCING PALATABILITY OF FISH FEED**

VERWENDUNG VON PROTEINHYDROLYSATEN UND -NUCLEOTIDEN ZUR VERBESSERUNG DES GESCHMACKS VON FISCHFUTTER

UTILISATION D'HYDROLYSATS DE PROTÉINES ET DE NUCLÉOTIDES POUR AMÉLIORER LA SAPIDITÉ D'ALIMENTS POUR POISSONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2012 EP 12306363**

(43) Date of publication of application:
**22.07.2015 Bulletin 2015/30**

(73) Proprietor: **Spécialités Pet Food
56250 Elven (FR)**

(72) Inventors:
• **HERAULT, Mikaël
F-56330 Pluvigner (FR)**
• **FOURNIER, Vincent
56860 Sene (FR)**

(74) Representative: **Regimbeau
20, rue de Chazelles
75847 Paris Cedex 17 (FR)**

(56) References cited:
**US-A- 3 573 066**     **US-A- 3 716 379
US-B2- 7 687 091**

• **KUBITZA FERNANDO ET AL: "Identification of feed enhancers for juvenile largemouth bass Micropterus salmoides", 1997, AQUACULTURE, VOL. 148, NR. 2-3, PAGE(S) 191-200, XP002689456, ISSN: 0044-8486 the whole document**
• **LI P ET AL: "Nucleotide nutrition in fish: Current knowledge and future applications", AQUACULTURE, ELSEVIER, AMSTERDAM, NL, vol. 251, no. 2-4, 28 February 2006 (2006-02-28), pages 141-152, XP027902845, ISSN: 0044-8486 [retrieved on 2006-02-28]**

Remarks:
The file contains technical information submitted after the application was filed and not included in this specification

## Description

The present invention relates to the field of aquaculture, more particularly fish feed in aquaculture.

More precisely, the invention concerns a method for preparing carnivorous fish feed pellets having enhanced palatability, wherein a protein hydrolysate having a degree of hydrolysis (DH) from 14.5 to 100% is combined to one or more nucleotides, and applied to carnivorous fish feed pellets.

BACKGROUND OF THE INVENTION

Farmers and manufacturers working in the aquaculture field are facing a major concern due to the fact that availability of marine raw materials is expected to decrease in the coming years when aquaculture is expanded more and more.

In particular, availability on the world market of fish meal and fish oil-which were used to serve as the dominant protein source in dry feed for fish - is dramatically decreasing and prices rise considerably for these raw materials. As a consequence, the aquaculture industry, especially the fish feed industry, has predicted for several years that there will be a shortage of both fish meal and fish oil in the future. Alternative animal protein sources can be used for dry fish feed. For instance, it is known to use land-based raw materials (e.g., blood metal, bone metal, feather meal, and other types of meal produced from other slaughterhouse waste, for example poultry meal), as well as plant-based raw materials (e.g., soy meal, wheat meal, rapeseed meal, rice meal, and the like). These are typically cheaper and more available than fish meal and fish oil. However, in some geographic regions, including Europe, there has been a prohibition against using land-based raw materials in the production of feeds for food-producing animals and fish.

Thus, for the last 20 years, the fish feed industry has become more and more interested in finding satisfying alternatives to fish meal and fish oil to be used for preparing feed for fish farming. However, the dietary level of fish meal remains crucial for achieving feed performance, affecting both feed palatability and feed utilization. Year after year, the level of fish meal in feed designed for carnivorous fish species tends to decrease and is close to reach a critical threshold for fish growth and feed utilization. Plant- and land-based feedstuffs are now commonly proposed in fish feed formulations as an alternative to fish meal. However, balancing the dietary amino acid profile of plant-rich diets to meet the fish amino acid requirements is not efficient enough to get satisfying fish and feed performances.

Feed palatability is firstly affected when substituting fish meal by plant- and land-based meals.

Unfortunately, edible ingredients dedicated to fish feed palatability are scarce. Focusing on palatability in fish and shrimp, many attractive molecules likely to be involved in olfaction and gustation could be identified. In particular, free amino acids and nucleotides are among the most powerful palatability-enhancing compounds, and fish and squid hydrolysates or extracts appear to have a positive effect on feed attractiveness and palatability. If such special raw materials or ingredients can be used to enhance palatability of feed formulations, they also have a nutritional interest. They are thus commonly incorporated by inclusion and mixed with other raw materials for preparing palatable fish feed.

There is a need in the art for further improving the palatability-enhancing properties of standard palatability enhancers commonly applied to fish feed such as amino acids and nucleotides, so as to meet a higher palatability result at low dosage, and thus at low cost.

Documents US 7,687,091 B2 and Aquaculture 148 (1997) 191-200 from Kubitza *et al* disclose compositions comprising amino acids and nucleotides as palatability agents or feed enhancers.

The feeding behaviour of fish is characterized by no feed nibbling and fast pellet ingestion. The transit time of pellets in the water is very short as they are eaten very fast by the fish when distributed. Pellets are not (or rarely) broken in the mouth of fish. A satisfying palatability enhancer needs thus to have a high contact with water to stimulate olfactory and gustatory fish receptors and to be easily sensed by the fish.

Regarding taste perception, fish are different from other animal by some specificity. Regarding physiology, if in mammals, most of the taste buds are located into the mouth and the digestive tract, in fishes, the taste buds are distributed in the lips, gill rakers, pharynx, oral cavity, and also on the body surface with some variations depending on the species (Ishimaru et al. 2005). Fish species respond to water-soluble chemical compounds, such as amino acids, organic acids, sugars, nucleotides, and bile acids, with higher sensitivity than mammals do (Hara, 1994). In the case of the taste receptors to amino acids and sweetness (T1 Rs), unlike mammals, fish are characterized by having multiple T1 R2s, all of which act as receptors to amino acids, although this receptor is specialized in sweet perception in most of other vertebrates. Vertebrate T1 R2s have probably evolved to adapt themselves to necessary nutrients depending on the species: fish to amino acids and mammals to sugars (Oike et al. 2007).

Moreover, regarding the T2R receptor sensible to bitterness, Dong et al. (2009) suggested a major divergence between the intact T2R genes of teleosts fishes and tetrapods. These taste genes were classed as the 'tetrapod group' and other genes in teleosts fishes as the 'fish group' (Dong et al. 2009). These are evidences for difference in bitter taste sensitivity between terrestrial vertebrates and fishes. A good illustration is the response to arginine which is considered as bitter in human and taste stimulant in fish (Grosvenor et al., 1998).

Thus, fish are considered as different from terrestrial vertebrates such as mammals for their taste perception.

The present Inventors have thus conducted a lot of trials as reported in the Examples below, to provide very powerful palatability enhancers (PEs) comprising amino acids and nucleotides. The Inventors have thereby been able to show that PEs comprising specific protein hydrolysates are particularly interesting for use in fish feed, and that the palatability-enhancing properties thereof can further be significantly improved upon combination with nucleotides.

## SUMMARY OF THE INVENTION

The present invention concerns a method for preparing carnivorous fish feed pellets having enhanced palatability.

The present invention also relates to a method for enhancing the palatability of carnivorous fish feed pellets.

The present invention further provides a method for enhancing the palatability of carnivorous fish feed pellets containing a protein hydrolysate.

The invention further concerns a method for enhancing the palatability effect of a protein hydrolysate to be applied to carnivorous fish feed pellets.

Also, the present invention is related to a method for feeding carnivorous fish.

The present invention also relates to the use of one or more nucleotides for enhancing the palatability effect of a protein hydrolysate contained in carnivorous fish feed pellets.

The present invention further provides the use of one or more nucleotides for enhancing the palatability effect of a protein hydrolysate contained in a PEC intended to be applied to carnivorous fish feed pellets.

## BRIEF DESCRIPTION OF THE FIGURES

Figure 1. Effect on fish feed palatability of a mixture of 17 free amino acids when applied on a plant-based feed in European seabass (application level: 2%).

Figure 2. Comparison of the palatability-enhancing effect of a mixture of 17 free amino acids and of 6 free amino acids and derivatives when applied on a plant-based feed in European seabass (application level: 2%).

Figure 3. Effect on fish feed palatability of a PEC comprising 4 amino acids and derivatives added to a mixture of 17 free amino acids, where said PEC is top-coated on a plant-based feed in European seabass, (application level: 2%).

Figure 4. Effect on fish feed palatability of three hydrolysates from different origins when top-coated on a plant-based feed in European seabass (application level: 2%).

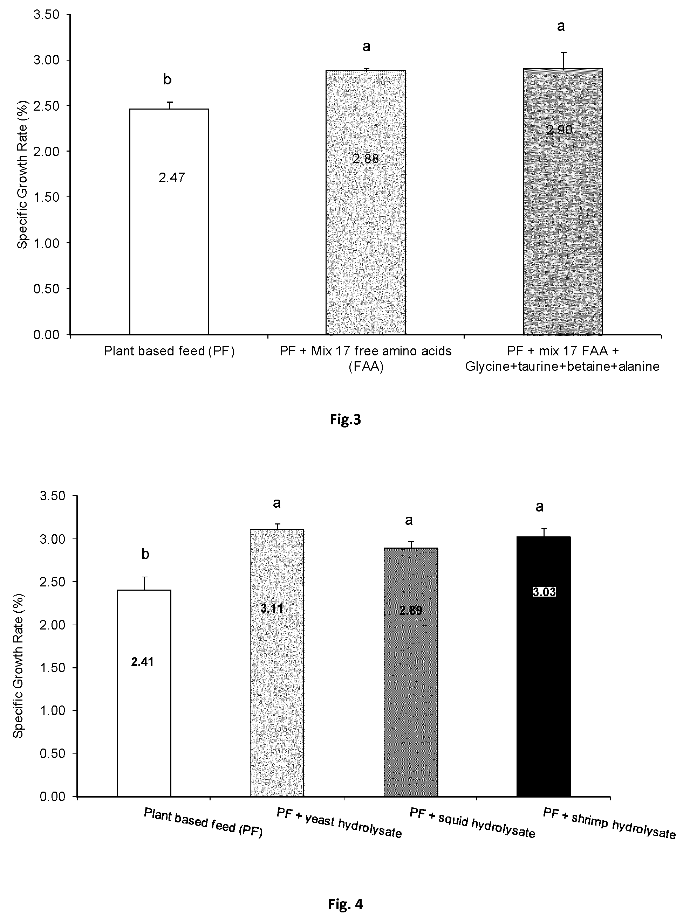

Figure 4. Effect on fish feed palatability of three hydrolysates from different origins when top-coated on a plant-based feed in European seabass (application level: 2%).

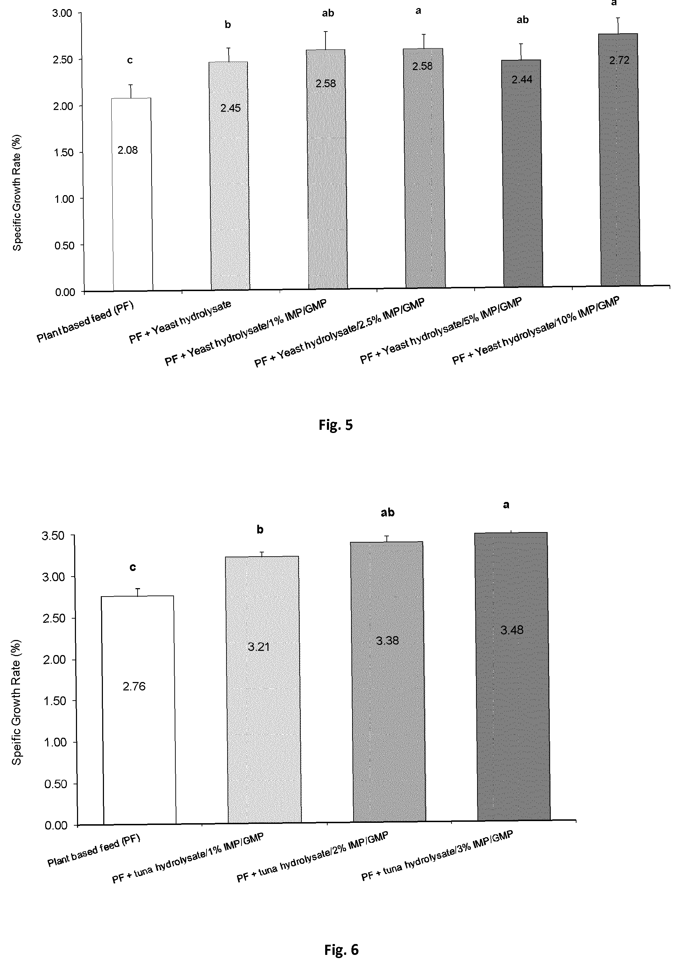

Figure 5. Effect on fish feed palatability of PECs comprising nucleotides (IMP/GMP 50/50) mixed at different levels to a yeast hydrolysate, said PECs being applied by top-coating on a plant-based feed in European seabass (ratio "hydrolysate/nucleotides": 99/1, 97.5/2.5, 95/5, and 90/10 - application level: 2%).

Figure 6. Effect on fish feed palatability of PECs comprising nucleotides (IMP/GMP 50/50) mixed to a tuna hydrolysate, where said PECs are applied by top-coating on a plant-based feed in European seabass (ratio "hydrolysate/nucleotides": 99/1, 98/2 and 97/3 - application level: 2%).

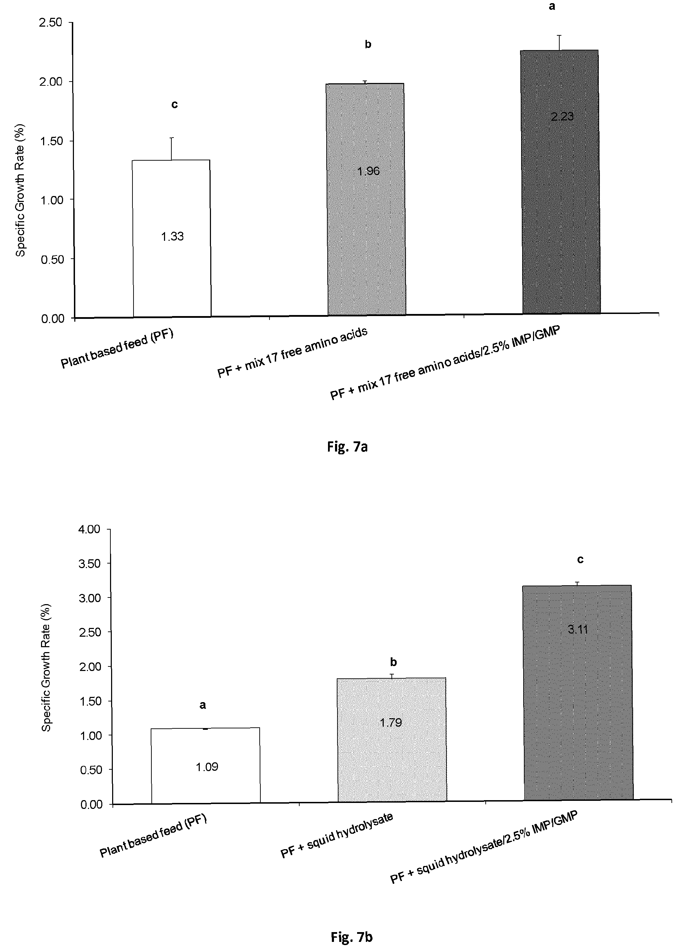

Figure 7a. Effect on fish feed palatability of a PEC comprising nucleotides (IMP/GMP 50/50) added to a mixture of free amino acids, where said PEC is applied by top-coating on a plant-based feed in European seabass (ratio "hydrolysate/nucleotides": 97.5/2.5 - application level: 2%).

Figure 7b. Effect on fish feed palatability of a PEC comprising nucleotides (IMP/GMP 50/50) added to a squid hydrolysate, where said PEC is applied by top-coating on a plant-based feed in European seabass (ratio "hydrolysate/nucleotides": 97.5/2.5 - application level: 2%).

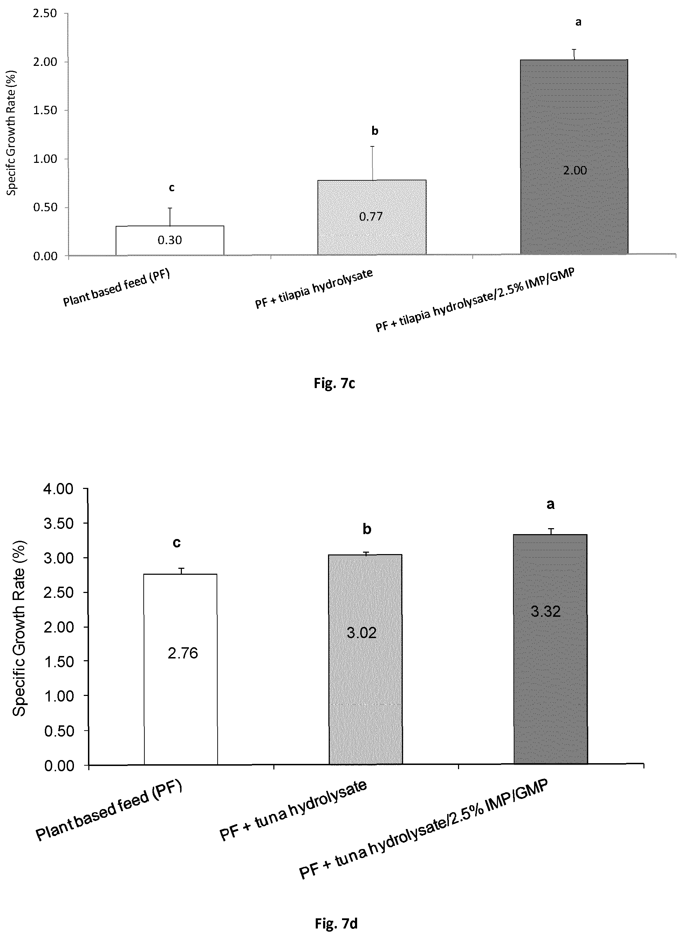

Figure 7c. Effect on fish feed palatability of a PEC comprising nucleotides (IMP/GMP 50/50) added to a tilapia hydrolysate, said PEC being applied by top-coating on a plant-based feed in European seabass (ratio "hydrolysate/nucleotides": 97.5/2.5 - application level: 2%).

Figure 7d. Effect on fish feed palatability of a PEC comprising nucleotides (IMP/GMP 50/50) added to a tuna hydrolysate, said PEC being applied by top-coating on a plant-based feed in European seabass (ratio "hydrolysate/nucleotides": 97.5/2.5 - application level: 2%).

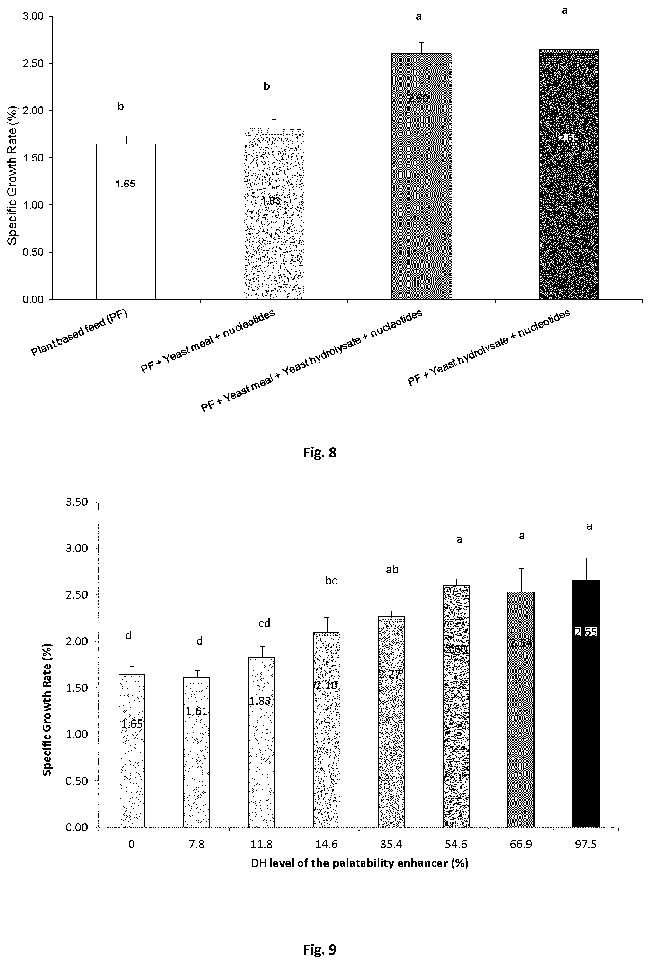

Figure 8. Effect on fish feed palatability of PECs comprising nucleotides (IMP/GMP 50/50) added to products having different degrees of protein hydrolysis, said PECs being applied by top-coating on a plant-based feed in European seabass (ratio "hydrolysate/nucleotides": 97.5/2.5 - application level: 2%).

Figure 9. Influence of the degree of hydrolysis of PECs containing a hydrolysate mixed with nucleotides (IMP/GMP 50/50), on their effect on feed palatability in European seabass fed with a plant-based feed (ratio "hydrolysate/nucleotides": 97.5/2.5 - application level: 2%).

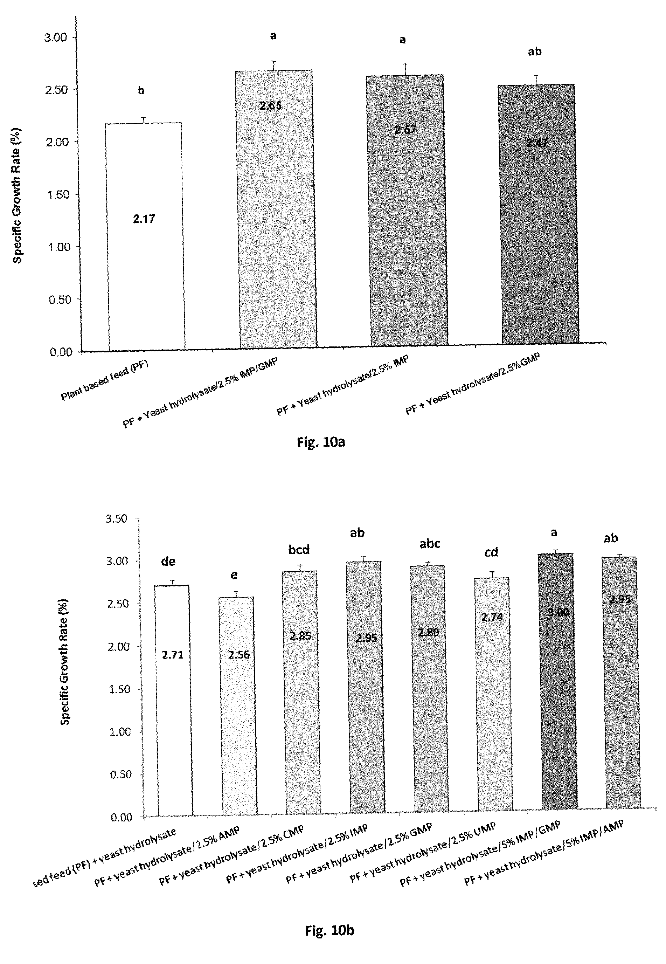

Figure 10a. Effect of IMP and GMP alone or together on the palatability-enhancing effect of a hydrolysate when applied on a plant-based feed in European seabass (ratio "hydrolysate/nucleotides": 97.5/2.5 - application level: 2%).

Figure 10b. Effect of different natures of nucleotides (IMP, AMP, UMP, CMP, GMP) and of some combinations thereof on the palatability-enhancing effect of a hydrolysate when applied on a plant-based feed in European seabass (ratio "hydrolysate/nucleotides": 97.5/2.5 - application level: 2%).

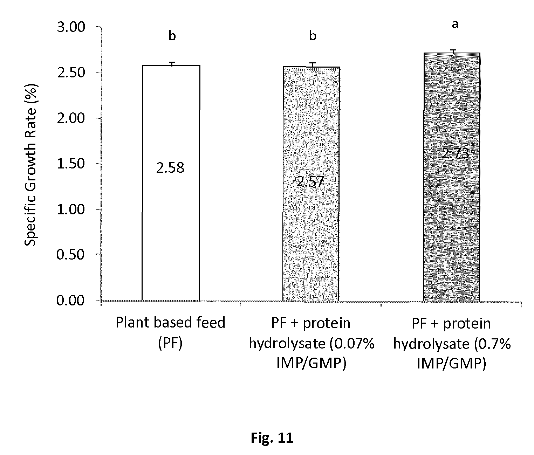

Figure 11. Effect on fish feed palatability of PECs comprising a combination of protein hydrolysates and nucleotides (IMP/GMP 50/50) applied by top-coating on a plant-based feed in tilapia (*Oreochromis niloticus*) (ratio "hydrolysate/nucleotides": 99.93/0.07 and 99.3/0.7 - application level: 2%).

DETAILED DESCRIPTION OF THE INVENTION

DEFINITIONS

Unless specifically stated otherwise, percentages are expressed herein by weight.

In the present disclosure, ranges are stated in shorthand, so as to avoid having to set out at length and describe each and every value within the range. Any appropriate value within the range can be selected, where appropriate, as the upper value, lower value, or the terminus of the range. For example, a range of 0.1-1.0 represents the terminal values of 0.1 and 1.0, as well as the intermediate values of 0.2, 0.3, 0.4, 0.5, 0.6, 0.7, 0.8, 0.9, and all intermediate ranges encompassed within 0.1-1.0, such as 0.2-0.5, 0.2-0.8, 0.7-1.0, etc.

As used throughout, the singular form of a word includes the plural, and vice versa, unless the context clearly dictates otherwise. Thus, the references "a", "an", and "the" are generally inclusive of the plurals of the respective terms. For example, reference to "a method" or "a feed" includes a plurality of such "methods" or "feeds". Similarly, the words "comprise", "comprises", and "comprising" are to be interpreted inclusively. Likewise the terms "include", "including" and "or" should all be construed to be inclusive. All these terms however have to be considered as encompassing exclusive embodiments that may also be referred to using words such as "consist of".

The methods and compositions and other embodiments exemplified here are not limited to the particular methodologies, protocols, and reagents that are described herein because, as the skilled artisan will appreciate, they may vary.

Unless defined otherwise, all technical and scientific terms, terms of art, and acronyms used herein have the meanings commonly understood by the skilled artisan in the field(s) of the invention, or in the field(s) where the term is used. Although any compositions, methods, articles of manufacture, or other means or materials similar or equivalent to those described herein can be used in the practice of the present invention, the preferred compositions, methods, articles of manufacture, or other means or materials are described herein.

The term "about" as used herein when referring to a measurable value such as an amount, a temporal duration, and the like, is meant to encompass variations of $\pm 20\%$, more preferably $\pm 10\%$, even more preferably $\pm 5\%$ from the specified value, as such variations are appropriate to reproduce the disclosed methods and products.

The terms "aquaculture", "fish farming", "fish breeding", and "fish rearing" are synonymous and are used herein according to their usual equivalent meaning. Fish are generally bred in "pens", "ponds", "tanks", or "cages" of different sizes, volumes and capacities, depending on the fish species to be reared, the location of the fish farm, the financial means of the fish farmer, etc.

The term "pen" will be used below to refer to anyone of a pen, a pond, a tank, and a cage.

In the context of the present invention, the term "fish" refers to any fish species that can be reared for the purposes of supplying dietary fish to the population (humans and animals, in particular, companion animals).

There are 3 distinct "groups of fish" that are defined by the nutritional requirements and feeding habits of the fish: the group of carnivorous fish, the group of omnivorous fish, and the group of herbivorous fish.

In particular, the fish according to the invention is a carnivorous fish or an omnivorous fish, more particularly a carnivorous fish.

As examples of carnivorous fish species, one can cite pink salmon (*Oncorhynchus gorbuscha*), chum salmon (*Oncorhynchus keta*), coho salmon (*Oncorhynchus kisutch*), masu salmon (*Oncorhynchus masou*), rainbow trout (*Oncorhynchus mykiss*), sockeye salmon (*Oncorhynchus nerka*), Atlantic salmon (*Salmo salar*), sea trout (*Salmo trutta*), brook trout (*Salvelinus fontinalis*), lake trout (*Salvelinus namaycush*), Japanese eel (*Anguilla japonica*), American eel (*Anguilla rostrata*), European eel (*Anguilla Anguilla*), largemouth black bass (*Micropterus salmoides*), greater amberjack (*Seriola dumerili*), Japanese amberjack (*Seriola quinqueradiata*), Japanese jack mackerel (*Trachurus japonicas*), dark seabream (*Acanthopagrus schlegeli*), white seabream (*Diplodus sargus*), crimson seabream (*Evynnis japonica*), red seabream (*Pagrus major*), red porgy (*Pagrus pagrus*), goldlined seabream (*Rhabdosargus sarba*), gilthead seabream (*Sparus aurata*), red drum (*Sciaenops ocellatus*), Southern bluefin tuna (*Thunnus maccoyii*), Northern bluefin tuna (*Thunnus thynnus*), climbing perch (*Anabas testudineus*), turbot (*Psetta maxima*), bastard halibut (*Paralichthys olivaceus*), common sole (Solea *vulgaris*), Senegalese sole (Solea *senegalensis*), Atlantic halibut (*Hippoglossus Hippoglossus*), striped bass (*Morone saxatilis*), barramundi (*Lates calcarifer*), Nile perch (*Lates niloticus*), Atlantic cod (*Gadus morhua*), European seabass (*Dicentrarchus labrax*), grouper (*Epinephelus sp.*) spotted coralgrouper (*Plectropomus maculates*), European perch (*Perca fluviatilis*), meagre (*Argyrosomus regius*), cobia (*Rachycentron canadum*).

As examples of omnivorous fish species, one can cite barb species (*Puntius spp.*), black carp (*Mylopharyngodon piceus*), Chinese mud carp (*Cirrhinus molitorella*), climbing perch (*Anabas testudineus*), common carp (*Cyprinus carpio*), crucian carp (*Carassius carassius*), pirapatinga (*Piaractus brachypomus*), silver or Java barb (*Barbonymus gonionotus*), Indian mrigal carp (*Cirrhinus mrigala*), Pacu (*Piaractus mesopotamicus*), Tilapia species [*Oreochromis spp. (niloticus* and *mossambicus* and hybrids), *Sarotherodon spp., Tilapia spp.*], catfish species [*Clarias spp.* (*gariepinus, macrocephalus,* hybrids), *Pangasius spp.* (*Pangasius hypophthalmus, Pangasius pangasius*), channel catfish (*Ictalurus punctatus*), amur catfish (*Silurus asotus*), Chinese longsnout catfish (*Leiocassis longirostris*), yellow head catfish (*Pelteobagrus fulvidraco*)].

As examples of herbivorous fish species, one can cite Chinese silver carp (*Hypophtalmichthys molitrix*), Indian catla carp (*Catla catla*), Indian rohu carp (*Labeo rohita*), milkfish (*Chanos chanos*), mullet (*Mugil cephalus*), Chinese grass carp (*Ctenopharyngodon idella*), Chinese "Wuchang" bream (*Megalobrama amblycephala*), large gourami (*Osphronemus goramy*), snakeskin gourami (*Trichigaster pectoralis*), some Tilapia species (*Tilapia rendalli* and *Tilapia zillii*), giant gourami (*Osphronemus goramy*), bighead carp (*Hypophthalmichthys nobilis* (filter feeder)).

The term "feed" as used herein means a product or composition that is intended for ingestion by a fish and provides at least one nutrient to the fish. The composition of the feed depends on the group of fish that will be fed with said feed. A feed for carnivorous fish is different from a feed for omnivorous fish and from a feed for herbivorous fish, the two latter feeds being also different from each other. Typically, fish, especially carnivorous fish, need protein, fat, minerals and vitamins in order to grow and to be in good health. The term "feed" according to the present invention excludes "baits" that are only used to attract fish.

Originally, in the farming of carnivorous fish, there were used whole fish or ground fish to cover the nutrient requirements of the farmed fish. Ground fish mixed with dry raw materials of various kinds, such as fish meal and starch, was termed "soft feed". Gradually, the farming became industrialized and soft feed was replaced by dry feed of the pressed feed type. The pressed feed was gradually replaced by dry feed of the extruded feed type. Today, extruded feed is nearly universal in the farming of a high number of fish species such as several species of salmonids, cod, sea bass and sea bream.

In its original and widest sense, "extrusion" means to create an object having a fixed cross-sectional profile. This is done by pulling or forcing a formable material through a die opening having the desired cross-section. In the food and feed industries, especially in the fish feed industry, the term "extrusion" is commonly used in a narrower sense. In these industries, extruders of the single screw or double screw type are used. The extruded material is a mixture of protein raw materials, starch containing raw materials, fat, and water. The water may be added to the mixture in the form of water or steam. In addition, the mixture may comprise minerals and vitamins and possibly pigment. The mixture may be preheated in a preconditioner where the heating takes place by addition of steam to the mixture. Steam and water may also be added to the substance inside the extruder. In the extruder itself, the dough-like substance is forced by means of the screws toward a constriction in the outlet end of the extruder and on through a die plate where the substance gets a desired cross-sectional shape. On the outside of the die plate is normally a rotating knife cutting the string coming out of the die holes into desired length. Normally, the pressure on the outside of the die plate will be equal to the surrounding pressure. The extruded product is generally referred to as "extrudate". Due to the pressure created inside the extruder and the addition of steam to the substance, the temperature can be above 100°C and the pressure can be above atmospheric pressure in the substance before it is forced out through the die openings. This extrusion process is also termed "cooking extrusion". Thus, by the term "extrusion" is meant herein cooking extrusion either by means of a single screw extruder or a double screw extruder. By an "extruded feed" is meant a feed produced by cooking extrusion either by means of a single screw extruder or a double screw extruder. Extruded fish feed is typically in the form of pellets. Most of, if not all, currently-available "extruded feed" contain less than about 10% water and are oil-coated.

By a "pressed feed" is meant a feed produced by means of a feed press. This process differs from extrusion in several ways. There is used less water and steam in the process. The feed mixture is forced through a die ring from the inside out by means of rollers rotating on the inside of the die ring. Temperature and pressure are lower than in extrusion, and the product is not porous. The process entails that the starch is not as digestive as after extrusion. A "pressed feed" will normally contain less than about 10% water after pressing and any oil coating. It is not necessary to dry a pressed feed. The feed is cooled prior to optional packaging.

By a "formulated fish feed" is meant a feed composed of one or more protein sources such as, but not limited to, marine protein including, *inter alia,* fish meal and krill meal, vegetable protein (e.g., soy meal, rapeseed meal, wheat gluten, corn gluten, lupine meal, pea meal, sunflower seed meal, and rice meal), and slaughterhouse waste such as blood meal, bone meal, feather meal, and poultry meal. By mixing different protein sources, each having its own amino acid profile, it is possible within certain limits to achieve a desired amino acid profile in the feed adapted to the group of fish, and even to the fish species, the feed is intended for.

A "formulated feed" further contains fats such as fish oil and/or plant-based oils (e.g., rapeseed oil and soy oil), and/or land-based fats (in particular, poultry fat) as energy sources. A formulated feed also contains a binder, usually in the form of a starch-containing raw material, such as wheat or wheat flour, potato flour, rice, rice flour, pea flour, beans or tapioca flour, to give the feed the desired strength and form stability.

A typical "formulated feed" further contains minerals and vitamins for taking care of good growth and good health of the fish. The feed may also contain further additives such as pigments.

A "formulated fish feed" is thus a composite feed wherein the relative amounts between proteins, fats, carbohydrates, vitamins, minerals and any other additives are calculated to be optimally adapted to the nutritional needs of the group of fish and of the fish species based on the age of the fish, the rearing method and the environmental conditions. It is common that feeding is done with only one type of feed at once and with that every piece of feed is nutritionally adequate. Thus, a "formulated fish feed" commonly has an approximate composition of 25-60 wt% protein, 5-40 wt% lipid, and 3-15 wt% moisture.

By a "dry, formulated feed" is meant a feed of the pressed or extruded type.

Both a "formulated fish feed" and a "dry, formulated fish feed" may be referred to herein as a "fish feed" or, more simply, as a "feed". Of course, exact meaning of these terms will be apparent to the reader in light of the context.

The term "pellet" used herein refers to particulate chunks or pieces formed by either a press or extrusion process. The pieces can vary in sizes and/or shapes, depending on the process or the equipment. Most fish feed pellets have a cylindrical shape. Since the fish is farmed using a fish feed product, starting with fingerlings (having the weight of about 1 g) up to large fish having a weight of several kilograms (e.g. 4 to 5 kg), various pellet sizes are required and used in the feeding at different stages of the growth of the fish. Size and/or shape of the pellets have indeed to be adapted to the size of the fish. Thus, during one cycle of fish rearing, pellets of increasing sizes are used as the fish is growing. For example, in the farming of salmon, 6 or 7 different pellet sizes are typically needed when using the existing fish feeds. Also, in seabass farming, pellets of 5 different sizes are commonly used to comply with the fish growth. The size of the pellet to be used is determined by the size of the fish in accordance with prior practice.

As used herein, the terms "feed pellets" fulfil both definitions of "feed" and "pellets" above. Thus, the terms "feed pellets" refer not only to the composition and formulation of the feed but also to the physical structure, the shape, the size, and the density of the pellets.

The term "palatability" means a preference of a fish for one feed to another. Palatability refers to the overall willingness of a fish to eat a certain feed. Advantageously but not necessarily, palatability further refers to the capacity of the eaten feed to satisfy the fish. Whenever a fish shows a preference, for example, for one of two or more feeds, the preferred feed is more "palatable" and has "enhanced palatability". The palatability of one feed compared to one or more other feeds can be determined, for example, by testing consumption of the feeds by fish. Such preference can arise from any of the fish senses, but typically is related to, *interalia,* taste, smell, aroma, flavour, texture, and/or mouth feel.

A fish feed stated herein to have "enhanced palatability" is one for which a fish exhibits preference compared to a control feed composition.

The terms "palatability enhancers" (PEs), "palatants", "flavours", "palatability agents", "appetizing factors", "flavour compositions", "palatability-enhancing compositions" (PECs), "flavour enhancers", "attractants" (excluding baits), and any other similar terms mean any material that enhances the palatability of a feed composition to a fish. A PE may be a single material or a blend of materials, and it may be natural, processed or unprocessed, synthetic, or part of natural and part of synthetic materials. Typically, a PE useful in fish feed is an edible composition that provides a taste, smell, aroma, flavour, texture, mouth feel, and/or organoleptic sensation that is appealing or pleasing to the fish.

Examples of commercially-available PEs useful in fish feed belong to the ACTIPAL™ product line (Aquativ, SPF, France).

As used herein, a "palatability-enhancing composition ingredient" is any compound, composition or material that is suitable for fish consumption. Non-limiting examples of palatability-enhancing composition ingredients are protein hydrolysates (including animal meals and/or hydrolysates, fish meals and/or hydrolysates, krill meals and/or hydrolysates, crustacean meals and/or hydrolysates, mollusk meals and/or hydrolysates (including worms), feather meals and/or hydrolysates, yeasts and/or hydrolysates and/or extracts, plant hydrolysates, algae meals and/or hydrolysates and/or extracts), nitrogen compounds [e.g., proteins, protein hydrolysates, peptides, and amino acids (in particular, free amino acids), amino acid derivatives (betaine, taurine)], nucleosides, nucleotides, carbohydrates, lipids or fats, organic acids, and the like. Also is encompassed by the terms "palatability-enhancing composition ingredient", any functional, active or bioactive edible ingredient that cannot undergo extrusion and thus has to be added by coating (e.g., vitamins, enzymes, pigments, aromas, hormones, etc.)

Protein hydrolysates can be obtained by conventional techniques, directly or indirectly (from protein extracts that can be pretreated or not), from raw materials which can be whole or part of one or more of animals, plants, algae, and microorganisms, and which may have been frozen or not. For example, protein hydrolysis can be achieved by one or more of physical means (e.g., heat and/or shear), chemical means (using acids or bases), enzymatic means (using endogenous enzymes, particularly proteases - thereby obtaining autolysates or ensilages -, and/or exogenous enzymes, particularly proteases).

The term "amino acid" means a molecule containing both an amino group and a carboxyl group. In some embodiments, the amino acids are $\alpha$-, $\beta$-, $\gamma$- or $\delta$-amino acids, including their stereoisomers and racemates.

By the term "peptide", it is meant herein a short chain of amino acids. By "short chain of amino acids", it is typically referred to a chain having from 2 to about 6 amino acids. In particular, a "peptide" in the present context has a molecular weight (MW) equal to or less than about 1000 Da.

Within the context of the invention, the term "free amino acids' refers to amino acids in non-peptidic form (i.e., not forming part of a molecule comprising two or more amino acid residues bound via a peptide bond).

As used herein, the term "natural amino acids" refers to amino acids found *in vivo* and which are produced by at least one naturally occurring organism, although they can also be produced by various chemical and/or biochemical means. The natural amino acids share a common stereochemistry, being all L-amino acids. As examples of natural amino-acids, one can cite histidine, isoleucine, leucine, lysine, methionine, phenylalanine, threonine, tryptophan, valine, alanine, arginine, asparagine, aspartic acid, cysteine, cystine, glutamic acid, glutamine, glycine, ornithine, proline, selenocysteine, serine and tyrosine.

The term "non-natural amino acids" relates to amino acids, which are not produced *in vivo*.

As used herein, the term "reducing sugars" means any monosaccharide or disaccharide that either has an aldehyde group or a ketone group or is capable of forming one in solution through isomerism. The functional group allows the sugar to act as a reducing agent for example in the Tollens' test or Benedict's test, or the Maillard reaction. Non-limiting examples include ribose, xylose, arabinose, mannose, glucose, fructose, rhamnose, lactose, maltose, fucose, galactose, and the like.

Since it is difficult, or even impossible, to determine the exact composition of protein hydrolysates, manufacturers rather commonly use undirect information such as the MW profile (using methods that are typically based on size-exclusion chromatography) and/or the degree of hydrolysis (DH) of peptide bonds of proteins. DH is represented by the: (i) ratio of amino nitrogen over total nitrogen (AN/AT Ratio) in the resulting hydrolysate; (ii) presence of amines in the hydrolysate; and (iii) osmolarity of the hydrolysate. Many conventional methods can be used to determine the DH. These methods can be either absolute (e.g., the OPA and TNBS methods), or estimated (e.g., the TCA method), or relative (e.g., the "pH stat" method). More precisely, methods used in the food and feed industries, and more specifically in the fish feed industry, for quantifying the DH are typically based on one of the following principles: (1) determination of soluble nitrogen in the presence of a precipitating agent such as trichloroacetic acid (TCA); or (2) determination of free alpha amino groups by colorometric methods (e.g., titration with trinitrobenzenesulfonic acid, TNBS), or pH titration of the released protons ("pH stat"). DH may advantageously be determined by an OPA (o-phthaldialdehyde)-based method as described in Nielsen (2001). Alternatively, TCA-soluble nitrogen may be determined by the Kjeldhal assay (A.O.A.C. 1995) or the Biuret reaction (Hung et al. 1984). Such methods are described in detail in Silvestre (1997).

A "nucleoside" is a compound containing a purine or pyrimidine base linked to a sugar (usually, ribose or deoxyribose), such as adenosine, inosine, uridine, guanosine, cytidine, ribothymidine, deoxyadenosine, deoxyinosine, deoxythymidine, deoxyuridine, deoxyguanosine, deoxycytidine, and the like.

A "nucleotide" is any compound consisting of a nucleoside combined with a phosphate group such as adenosine monophosphate, inosine monophosphate, thymidine monophosphate, uridine monophosphate, guanosine monophosphate, cytidine monophosphate, adenosine diphosphate, inosine diphosphate, thymidine diphosphate, uridine diphosphate, guanosine diphosphate, cytidine diphosphate, adenosine triphosphate, inosine triphosphate, thymidine triphosphate, uridine triphosphate, guanosine triphosphate, cytidine triphosphate, deoxyadenosine monophosphate, deoxyinosine monophosphate, deoxythymidine monophosphate, deoxyuridine monophosphate, deoxyguanosine monophosphate, deoxycytidine monophosphate, deoxyadenosine diphosphate, deoxyinosine diphosphate, deoxythymidine diphosphate, deoxyuridine diphosphate, deoxyguanosine diphosphate, deoxycytidine diphosphate, deoxyadenosine triphosphate, deoxyinosine triphosphate, deoxythymidine triphosphate, deoxyuridine triphosphate, deoxyguanosine triphosphate, deoxycytidine triphosphate, and the like.

Examples of lipids include tallow, oils, fats from any origin such as animal, plant (including vegetable), dairy or marine oils, all of these being indifferently herein referred to as "lipids", "fats" or "oils". Plant oils which are available in large quantities are typically canola oil, soybean oil, corn oil, olive oil, sunflower oil, rapeseed oil, linseed oil, palm oil, safflower oil, and the like, as well as by-products thereof. Typical animal fats are tallow, lard, poultry fat, beef fat, and the like, as well as by-products thereof. Marine oils are typically tuna oil, sardine oil, salmon oil, anchovy oil, other pelagic fish oil, and the like, as well as by-products thereof. Also are encompassed herein the fats that are derived from animal, plant, marine sources, or that are produced by fish, animals and plants. Preferably, fish feed contains marine oils.

As reflected by the definitions provided above, palatability-enhancing composition ingredients include more particularly "nutrients" or "macronutrients", and "micronutrients".

Examples of "nutrients" or "macronutrients" are, without limitation, fish-, plant- and land-based raw materials, nitrogen compounds (e.g., proteins, peptides, amino acids, especially free amino acids, amino acid derivatives), carbohydrates, fats, and the like.

Examples of "micronutrients" include, without limitation, vitamins, minerals and oligoelements, such as vitamins A, C, E, B12, D3, folic acid, D-biotin, cyanocobalamin, niacinamide, thiamine, riboflavin, pyridoxine, menadione, beta-carotene, calcium pantothenate, choline, inositol, calcium, phosphorus, potassium, sodium, zinc, iron, manganese, copper, iodine, and the like.

In the present text, the term "nutrients" may be used to refer to nutrients or to micronutrients or to both. Of course, the exact meaning of this term will be made clear by the context to the skilled artisan.

"Preservatives" are in particular used for ensuring a long shelf life of feed, in particular of fish feed. Preservatives comprise natural or synthetic anti-oxidants (such as ethoxyquine, BHA, BHT, propyl gallate, octyl gallate, tocopherols, rosemary extracts, and the like); chelatants (e.g., citric acid); as well as sorbic acid or sorbic salts (e.g., potassium sorbate), and other acids like phosphoric acid, and the like.

A "pigment" means herein any substance of natural origin or any synthetic colour that is suitable (preferably, approved or certified) for use in fish feed. Pigments are useful to, *inter alia,* give an appetizing colour to a fish feed and/or give an appetizing colour to the fish intended for consumption by animals and/or humans. Examples of commonly used pigments in aquaculture are carotenoids (such as canthaxanthin, astaxanthin, etc.), and the like.

A "thermal reaction" is, according to the present invention, a reaction obtained by combining at an elevated temperature, at least one carbohydrate, preferably a reducing sugar, and at least one nitrogen compound. Such a reaction may actually include various concomitant and/or successive reactions, including, e.g., Maillard reaction(s).

As used herein, the term "Maillard reaction" means a heating reaction occurring between ingredients including a nitrogen source, preferably amino nitrogen, and a carbohydrate source, preferably a reducing sugar, this reaction being one of the most important routes to flavour compounds in cooked foods. This reaction is complex and provides a large number of compounds which contribute to flavor.

"Maillard reaction product" means herein any compound produced by a Maillard reaction. In particular, a Maillard reaction product is a compound that provides flavour and/or color and/or odor and/or taste and/or aftertaste.

In the field of the present invention, the skilled artisan is familiar with "zootechnical parameters" which include survival rate, feed intake or feed consumption (Fc), specific growth rate (SGR), and feed conversion ratio (FCR). These parameters are commonly used in aquaculture to assess, e.g., how/what fish eat or prefer to eat, how fish grow, how fish utilize the feed ingested, etc. They are determined using conventional experimental measures and mathematical equations that are well-known in the art (see, e.g., the handbook by Guillaume et al. published in September 2001).

The "survival rate" parameter can be defined as the ratio of the initial fish number (i.e., the total number of fish that are initially contained in a pen) to the final fish number (i.e., the total number of living fish that are finally contained in the pen).

The "specific growth rate" parameter (SGR) is expressed as percentage increase in fish biomass from day to day. SGR (expressed, e.g., in %/day) does not take into account the amount of feed fed to obtain growth. It is a measure of growth rate only. SGR depends on the digestibility of the fish feed and its profile in terms of protein and fat ratio, as well as of amino acid and fatty acid compositions.

The "feed consumption" or "feed intake" parameter (Fc) is defined as the weight of the feed really consumed by the fish in the pen during a given period of time. Fc can be calculated using Equation (1):

$$Fc = Fd - Fu,$$

wherein Fd is the dry weight of the total feed that is distributed in excess in the pen during said period of time, and Fu is the dry weight of the total uneaten feed that is recovered daily from the pen during said period of time.

Fc can be expressed in g feed / kg of average biomass of fish / day.

The "feed conversion ratio" parameter (FCR) is an economic parameter indicating how efficiently the fish grows on the feed. Fish growth actually corresponds to protein, fat and water deposition in the muscle. FCR thus reflects the "feed utilization" by the fish, or the "feed efficiency". FCR varies between fish species and also with the size of the fish. As an example, in Atlantic salmon, FCR may typically be from about 0.7 to about 2. Industrial fish feed in the form of pressed feed and extruded feed contains low amounts of water, typically from about 5 to about 10%. The fish body has a higher water content. This is the reason why the FCR of different feeds should theoretically take into account the water content of the feeds as water does not contribute to growth. More precisely, the FCR should theoretically be calculated on a dry matter basis. However, as the water content is within a narrow range and as it is cumbersome for the fish farmer to calculate dry matter FCR, FCR is usually calculated on the feed including water content.

It is of note that zootechnical parameter determination is important in aquaculture, at least for the following reasons. There are typically numerous individual fish in a pen or a pond (e.g., 10000 to 30000 individuals), so that feeding cannot be observed on the individual level. In addition, some feed is commonly lost because feed pellets break apart in the feeding system and the broken pieces are too small to be eaten or are so small that they are recognized as dust. Also, some feed pellets are not eaten by the fish but just sink through the water column. Moreover, some feed is lost because the fish are fed to satiation, while feeding continues (known as "overfeeding" or feeding "in excess"). Alternatively, underfeeding may occur, in which case the FCR increases because a higher proportion of the feed nutrients (fish-, plant- or land-based raw materials, nitrogen compounds, fat, carbohydrates, and the like) will be used for metabolic purposes instead of being used for muscle deposition.

Unless otherwise specified, weights are herein expressed in grams.

"Coating" or "top-coating", as used herein, refers to topical deposition of a palatability-enhancing composition onto the surface of a fish feed, such as by spraying, dusting, and the like.

"Inclusion" as used herein, refers to addition of a palatability-enhancing composition internally to a fish feed preparation, by mixing it with the fish feed preparation, before further processing steps for obtaining the final fish feed.

When referring to a kit, the term "single package" means that the components of said kit are physically associated in or with one or more containers and considered as a unit for manufacture, distribution, sale, or use. Containers include, but are not limited to bags boxes, cartons, bottles, pouches, packages of any type or design or material, over-wrap, skrink-wrap, stapled or otherwise affixed components, or combinations thereof. A single package may be containers of individual components physically associated such that they are considered as forming a unit for manufacture, distribution, sale, or use.

As used herein, a "means for communicating information or instructions" is a kit component under any form suitable for providing information instructions, recommendations, and/or warranties, etc. Such a means can comprise a document, digital storage media, optical storage media, audio presentation, visual display containing information. The means of communication can be a displayed web site, brochure, product label, package insert, advertisement, visual display, etc.

DESCRIPTION OF SOME EMBODIMENTS OF THE INVENTION

The experimental results obtained by the Inventors and reported in the Examples below demonstrate that it is possible to use nucleotides as boosters or stimulants of the palatability-enhancing properties of protein hydrolysates in carnivorous fish feed pellets. These results further show that this boosting or stimulating effect of nucleotides is higher when protein hydrolysates have a specific degree of hydrolysis.

Thus, nucleotides make it possible to improve the palatability-enhancing properties of protein hydrolysates in carnivorous fish feed pellets. Actually, nucléotides alone are not as efficient palatability enhancers as protein hydrolysates alone. However, in combination with protein hydrolysates, nucleotides make it possible to significantly and efficiently increase or improve or enhance the palatability of carnivorous fish food polloto.

Thus, a first aspect of the present invention concerns a method for preparing carnivorous fish feed pellets having enhanced palatability, comprising:

a) providing a palatability-enhancing composition (PEC) comprising:

- a protein hydrolysate having a degree of hydrolysis (DH) from 14.5 to 100%, combined to

- one or more nucleotides, and

- optionally, in the presence of one or more additional palatability-enhancing composition ingredients;

b) applying said PEC to carnivorous fish feed pellets; and

c) recovering said carnivorous fish feed pellets having enhanced palatability.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

Preferably, all DH values disclosed herein are determined using an absolute method, more preferably the OPA method described in the Definitions above and recalled in the Examples below.

Preferably, said PEC preferably has a DH from 14.5 to 100%.

Preferably, the DH value(s) of the protein hydrolysate and/or of the PEC is (are) from about 20 to 100%, more preferably from about 30 to 100%, and even more preferably from about 40 to 100%. The DH value of the protein hydrolysate can be the same as, or different from, that of the resulting PEC, but both DH values lie in the ranges set forth above.

Preferably, the protein hydrolysate is present in an amount from 14.5 to 100% by weight in said PEC. Yet preferably, said protein hydrolysate amount is from about 20 to 100%, yet more preferably from about 30 to 100%, and even more preferably from about 40 to 100%, by weight in said PEC.

Protein hydrolysates can be obtained by conventional techniques. For example, protein hydrolysis can be achieved by one or more of physical means (e.g., heat and/or shear), chemical means (using acids or bases), enzymatic means (using endogenous enzymes - thereby obtaining autolysates or ensilages -, and/or exogenous enzymes).

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

Said one or more nucleotides are preferably present in an amount ranging from about 0.1 to about 25% by weight of the palatability-enhancing composition (PEC). The lower limit of said nucleotide amount range is preferably of about 0.5% by weight, yet preferably of about 1% by weight of the PEC. The upper limit of said nucleotide amount range is preferably of about 20% by weight, yet preferably of about 15% by weight, even more preferably of about 10% by weight, and yet even more preferably of about 5% by weight of the PEC. For example, the nucleotide amount can range from about 0.1 to about 1% by weight of the PEC. Preferably, it will range from about 1 to about 5% by weight of the PEC.

In the context of the present invention, nucleotides are selected from inosine monophosphate (IMP), guanosine monophosphate (GMP), cytidine monophosphate (CMP), and combinations thereof. In particular, nucleotides according to the invention do not encompass adenosine monophosphate (AMP) and uridine monophosphate (UMP).

In particular, when IMP is present among the one or more nucleotides that are used in combination with the protein hydrolysate, it is present in an amount ranging from about 0.1 to about 25% by weight in said PEC. The lower limit of said IMP amount range is preferably of about 0.5% by weight, yet preferably of about 1% by weight. The upper limit of said IMP amount range is preferably of about 20% by weight, yet preferably of about 15% by weight, even more preferably of about 10% by weight, and yet even more preferably of about 5% by weight. For example, the IMP amount can range from about 0.1 to about 1% by weight. Preferably, it will range from about 1 to about 5% by weight.

Yet in particular, when GMP is present among the one or more nucleotides that are used in combination with the protein hydrolysate, it is present in an amount ranging from about 0.1 to about 25% by weight in said PEC. The lower limit of said GMP amount range is preferably of about 0.5% by weight, yet preferably of about 1% by weight. The upper limit of said GMP amount range is preferably of about 20% by weight, yet preferably of about 15% by weight, even more preferably of about 10% by weight, and yet even more preferably of about 5% by weight. For example, the GMP amount can range from about 0.1 to about 1 % by weight. Preferably, it will range from about 1 to about 5% by weight.

Even in particular, when CMP is present among the one or more nucleotides that are used in combination with the protein hydrolysate, it is present in an amount ranging from about 0.1 to about 25% by weight in said PEC. The lower limit of said CMP amount range is preferably of about 0.5% by weight, yet preferably of about 1% by weight. The upper limit of said CMP amount range is preferably of about 20% by weight, yet preferably of about 15% by weight, even more preferably of about 10% by weight, and yet even more preferably of about 5% by weight. For example, the CMP amount can range from about 0.1 to about 1 % by weight. Preferably, it will range from about 1 to about 5% by weight.

Even yet in particular, when GMP and IMP are present among the one or more nucleotides that are used in combination with the protein hydrolysate, the total amount of GMP + IMP ranges from about 0.1 to about 25% by weight in said PEC. The lower limit of said amount range is preferably of about 0.5% by weight, yet preferably of about 1% by weight. The upper limit of said amount range is preferably of about 20% by weight, yet preferably of about 15% by weight, even more preferably of about 10% by weight, and yet even more preferably of about 5% by weight. For example, the GMP + IMP amount can range from about 0.1 to about 1% by weight. Preferably, it will range from about 1 to about 5% by weight.

In some embodiments, said one or more nucleotides contained in the PEC are naturally provided with said protein hydrolysate. This means that the method of the present invention uses a protein hydrolysate that is naturally rich in nucleotides. For example, such a protein hydrolysate can be selected from hydrolysates of krill, shrimp, squid, sardine, and tuna.

In alternative embodiments, said one or more nucleotides are added to said protein hydrolysate.

In particular, said method according to the invention does not aim at producing Maillard reaction products or at performing Maillard reactions. Maillard reactions are known to reduce the nutritional quality of fish feeds by destruction of essential amino acids, by decreasing digestibility, by eventually producing antinutritional and/or toxic components (Friedman, 1989). For that reason, reduction in weight gain and feed efficiency, as well as perturbation of protein metabolism may be observed (Plakas et al., 1985).

In particular, said method is performed in the presence of reducing sugars in an amount less than 5 %, particularly less than 3 %, less than 2 %, less than 1.5 % by weight based on the total weight of the palatability-enhancing composition

In particular, said method is performed in the presence of reducing sugars in the palatability-enhancing composition at a weight ratio of reducing sugars to free amino acids from 0.001 to 0.75, particularly from 0.008 to 0.5 and more particularly from 0.01 to 0.25 and even more particularly 0.015 to 0.18.

The PEC may contain additional palatability-enhancing composition ingredients as defined above. For instance, such ingredients are selected from amino acid derivatives (such as taurine and betaine), organic acids (e.g., lactic acid, malic acid, formic acid), fats (including butyric acid), aromas, hormones, etc.

Preferably, the PEC is applied to carnivorous fish feed pellets by inclusion or by coating. In particular, when the PEC is applied by coating, carnivorous fish feed pellets are coated with an amount of said PEC from about 0.1% to about 20% by weight. Interestingly, a method for preparing coated fish feed pellets having standardized palatability using a coefficient of enhancement ($K_e$) is described in European patent application filed on November 8, 2011 under No. EP11306453.9.

Preferably, said PEC amount is from about 0.3 to about 15% by weight. More preferably, this amount is from about 0.3 to about 10% by weight. Yet more preferably, this amount is from about 0.3 to about 5% by weight.

In another aspect, the present invention relates to a method for enhancing the palatability of carnivorous fish feed pellets, comprising:

　　a) applying to said fish feed pellets a PEC comprising:

　　- a protein hydrolysate having a DH from 14.5 to 100%, combined to
　　- one or more nucleotides, and
　　- optionally, in the presence of one or more additional palatability-enhancing composition ingredients.

All the requirement, as well as all the preferred, advantageous or particular embodiments described above in connection with the method for preparing carnivorous fish feed pellets having enhanced palatability according to the first aspect of the present invention, also apply to the second aspect of the invention relating to a method for enhancing the palatability of carnivorous fish feed pellets.

Yet another aspect of the present invention is directed to a method for enhancing the palatability of carnivorous fish feed pellets containing a protein hydrolysate, comprising:

　　a) applying one or more nucleotides inosine monophosphate (IMP), guanosine monophosphate (GMP), cytidine monophosphate (CMP), and combinations thereof to said fish feed pellets containing said protein hydrolysates, wherein said protein hydrolysate has a DH from 14.5 to 100%.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

Here, the nucleotides selected from inosine monophosphate (IMP), guanosine monophosaphate (CMP), cytidine monophosphate (CMP), and combinations thereof are applied to carnivorous fish feed pellets already containing a protein hydrolysate.

In particular, the carnivorous fish feed pellets can contain the protein hydrolysate by inclusion or by coating. In other words, either the protein hydrolysate is included in the carnivorous fish feed pellets or the pellets are coated with the protein hydrolysate.

Yet in particular, the nucleotides can be applied to the carnivorous fish feed pellets by inclusion or by coating. In other words, either the nucleotides are included in the carnivorous fish feed pellets or the pellets are coated with the nucleotides.

A further aspect of the present invention concerns a method for enhancing the palatability effect of a protein hydrolysate to be applied to carnivorous fish feed pellets, comprising:

a) combining said protein hydrolysate to one or more nucleotides selected from inosine monophosphate (IMP), guanosine monophosphate (GMP), cytidine monophosphate (CMP), and combinations thereofinosine monophosphate (IMP), guanosine monophosphate (GMP), cytidine monophosphate (CMP), and combinations thereof, wherein said protein hydrolysate has a DH from 14.5 to 100%.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

Said protein hydrolysate can be combined to said nucleotides before application to carnivorous fish feed pellets. If so, the combination of the protein hydrolysate and of the nucleotides is applied to carnivorous fish feed pellets by inclusion or by coating. By doing so, the protein hydrolysate and the nucleotides are applied to the carnivorous fish feed pellets concomitantly.

Alternatively, said protein hydrolysate and said nucleotides can be combined *in situ* by sequential application to said carnivorous fish feed pellets. A "sequential application" encompasses an (application of the protein hydrolysate followed by an application of the nucleotides, or an application of the nucleotides, followed by an application of the protein hydrolysate. Each of the protein hydrolysate and the nucleotides can be applied to said carnivorous fish feed pellets by inclusion or by coating.

Advantageously, both the protein hydrolysate and nucleotide contents of the pellets obtained after sequential (application of said protein hydrolysate and nucleotides are similar to those of pellets obtained when the protein hydrolysate and the nucleotides are applied concomitantly.

In another aspect, the present invention is related to a method for feeding carnivorous fish, comprising:

a) feeding carnivorous fish feed pellets to carnivorous fish, wherein said pellets comprise a protein hydrolysate combined to one or more nucleotides selected from inosine monophosphate (IMP), guanosine monophosphate (GMP), cytidine monophosphate (CMP), and combinations thereofinosine monophosphate (IMP), guanosine monophosphate (GMP), cytidine monophosphate (CMP), and combinations thereof, wherein said protein hydrolysate has a DH from 14.5 to 100%.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

It is disclosed herein a PEC to be applied to fish feed pellets, comprising:

- a protein hydrolysate having a DH from 14.5 to 100%, combined to
- one or more nucleotides, and
- optionally, in the presence of one or more additional palatability-enhancing composition ingredients.

All the preferred, advantageous or particular features described above in connection with the method for preparing fish feed pellets having enhanced palatability according to the first aspect of the present invention, also apply to the PEC disclosed herein.

Said PEC can be liquid or dry.

Said PEC can be applied to fish feed pellets by inclusion or by coating.

In a further aspect, the present invention relates to the use of one or more nucleotides selected from inosine monophosphate (IMP), guanosine monophosphate (GMP), cytidine monophosphate (CMP), and combinations thereof inosine monophosphate, (IMP), guanosine monophosphate (GMP), cytidine monophosphate (CMP), and combinations thereof for enhancing the palatability effect of a protein hydrolysate contained in carnivorous fish feed pellets, wherein said protein hydrolysate has a DH from 14.5 to 100%.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

in particular, said carnivorous fish feed pellets contain said protein hydrolysate by inclusion or by coating.

Yet in particular, the nucleotides are used by inclusion into said carnivorous fish feed pellets or by coating said carnivorous fish feed pellets.

A further aspect of the present invention is directed to the use of one or more nucleotides selected from inosine monophosphate (IMP), guanosine monophosphate (GMP), cytidine monophosphate (GMP), and combinations thereofinosine monophosphate (IMP), guanosine monophosaphate (GMP), cytidine monophosphate (CMP), and combinations thereof for enhancing the palatability- effect of a protein hydrolysate contained in a PEC intended to be applied to carnivorous fish feed pellets, wherein said protein hydrolysate has a DH from 14.5 to 100%.

Said protein hydrolysate contain at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

Preferably, said PEC has a DH from 14.5 to 100%.

Preferably, the DH value(s) of the protein hydrolysate and/or of the PEC is (are) from about 20 to 100%, more preferably from about 30 to 100%, and even more preferably from about 40 to 100%. The DH value of the protein hydrolysate can be the same as, or different from, that of the resulting PEC, but both DH values lie in the ranges set forth above.

Said PEC can be applied to carnivorous fish feed pellets by inclusion or by coating.

Yet it is disclosed herein a kit for enhancing the palatability of fish feed pellets, comprising, in one or more containers in a single package:

    a) one or more protein hydrolysates having a DH from 14.5 to 100%;
    b) one or more nucleotides; and
    c) optionally, one or more additional palatability-enhancing composition ingredients.

Said protein hydrolysate can contain at least 10, particularly at least 11, at least 12, at least, 13, at least 14, at least 15, at least 16 and more particularly at least 17 different free amino acids; in particular, said amino acids being natural amino acids.

More particularly, said protein hydrolysate contains 17 different free natural amino acids.

Said protein hydrolysate can contain at least 14.5 %, at least 20 %, at least 25 %, at least 29 %, at least 35 %, at least 40 %, at least 45 %, at least 50 %, at least 60 %, at least 70 %, at least 80 %, at least 90 %, at least 95 %, at least 98 %, particularly 100 % of free amino acids relative to the total amount of amino acids of said protein hydrolysate.

In particular, said protein hydrolysate has an in vitro digestibility, determined according to M150 (Boisen, 1991) of at least 90%, more particularly of at least 92%, at least 94%, at least 96% and more particularly of at least 98% of Nitrogen.

Advantageously, said kit further comprises a means for communicating information or instructions to the user for appropriate use of the components of the kit.

A desirable fish feed for use in aquaculture will lead to a high SGR and a low FCR. In this prospect, fish feed typically comprises one or more of:

- sources of protein, carbohydrate and lipid [for example, fish meal, fish oil, animal meal (for example blood meal, feather meal, poultry meal and/or other types of meal produced from other slaughterhouse waste), animal fat (for example poultry oil), vegetable meal (e.g., soya meal, lupine meal, pea meal, bean meal, rape meal, sunflower meal), vegetable oil (e.g., rapeseed oil, soya oil), gluten (e.g., wheat gluten, corn gluten) and added amino acids (e.g., lysine, methionine)]; and/or
- vitamin premix; and/or
- mineral premix; and/or
- phosphorus sources (e.g., monocalcium phosphate, dicalcium phosphate); and/or
- pigments (e.g., canthaxanthin, astaxanthin).

Fish feed pellets are commonly obtained by a cooking extrusion process. Cooking extrusion of material containing starch causes the starch granules to swell such that the crystalline starch in the granules is released and may unfold. This is referred to as gelatinization of the starch. The starch molecules will form a network contributing to bind the extrudate together. Particularly in the feed for carnivorous fish, starch-containing raw materials are added due to their binding ability in the final fish feed. The natural prey for carnivorous fish does not contain starch. Carnivorous fish thus have small amounts of enzymes able to change starch to digestible sugar. Cooking of the starch makes it more digestible. This is partly due to the starch no longer being in a raw, crystalline form, and partly that the cooking process starts a decomposition of starch into smaller sugar units, which are easier to digest. Another effect of cooking extrusion on the mixture of protein, carbohydrates and fat, is that these will form complexes and bindings that may have both positive effects on the digestibility of the mixture. A further effect of cooking extrusion is that the extrudate become porous. This is due to the pressure drop and the temperature drop over the die opening. The water in the extrudate will immediately expand and be liberated as steam leaving a porous structure in the extrudate. This porous structure may be filled with oil in a later process step. An extruded feed will typically contain between 18 and 30% water after extrusion. After extrusion, this feed usually goes through a drying step and, advantageously, a following step of oil coating. The end product generally contains about 10% of water or less and will thus have a long shelf life as the water activity is so low in such feeds, that growth of fungus and mould is prevented and also that bacterial decay is avoided. In particular, before or after coating with oil, the feed is cooled and can be packaged.

The following Examples illustrate some embodiments and advantages of the present invention.

EXAMPLES

**I- <u>Materials and methods</u>**

**1.1. Fish species**

For the purposes of illustrating the present invention, European seabass (*Dicentrarchus labrax*) was selected as being considered as an appropriate model carnivorous fish having high requirement in feed palatability (Altan et al., 2011).

For application to other species, tilapia (*Oreochromis niloticus*) was selected as being considered as appropriate model for omnivorous species (González-Félix et al., 2009).

**1.2. Feed composition and feed preparation**

An experimental fish meal (FM) free feed, called hereinafter plant-based feed or PF, was formulated (table 1 below). This type of formula appears to be highly unpalatable for carnivorous and omnivorous fish and is thus considered as a good negative control for screening PEs because of its neutrality regarding olfaction and taste.

The formulated feed met the theoretical nutritional requirements of European seabass and tilapia excepted for palatability. The nutritional composition of the feed was as follows: crude protein: 45%, crude fat: 16%, ash: 7%, crude energy: 4950Kcal/kg. Size of the pellets was 2mm.

Table 1. Composition of the plant-based feed used in the trials

| Raw materials and ingredients | Plant-based feed (PF) |
|---|---|
| Mixture of plant-based meals | 80.07 |
| DL-Methionine | 0.69 |
| Lysine-HCl | 1.78 |
| Arginine-HCl | 0.00 |
| MonoSodiumPhosphate | 2.62 |
| Fish oil | 12.55 |
| Premix (vitamins, minerals, antioxidants, etc.) | 2.31 |

### 1.3. Fish trials

For European seabass, the trials were conducted in the experimental flow-through facilities of IFREMER (Centre de Brest, France). Seawater (salinity: 35 g/l) was filtered (high pressure sand filter) and thermoregulated (water temperature: $20 \pm 1°C$). Triplicate groups of 40 juvenile European seabass (D. *labrax*) each having initial mean body weight: 5.0-20.0 g, (depending on the trial) were reared in tanks of 80 l capacity (flow rate: 3 l/min; photoperiod: 12 h light / 12 h dark). Three tanks were allotted at random to each feed.

The feeds were distributed in excess to the fish for 15 days, by automatic feeder (Arvotech, Finland), 10 feed distributions per day. Uneaten feed was collected every day by home-made feed waste collectors, pooled and kept frozen till the end of the trial. At the end, the frozen uneaten feed was dried by evaporation and weighed.

For tilapia, the trial was conducted in the experimental facilities of Aqua-Erf (Belgium) in freshwater recirculation system. Triplicate groups of 30 tilapia each having initial mean body weight of 21.7g were reared in fibertank of 100l (flow rate: 3 l/min; photoperiod: 12 h light / 12 h dark). Three tanks were allotted at random to each feed.

Feed were distributed in excess to the fish for 105 days using automatic belt feeders. Uneaten feed was collected every day by home-made feed waste collectors, pooled and kept frozen till the end of the trial. At the end, the frozen uneaten feed was dried by evaporation and weighed.

In both trials, fishes were counted and weighted at the beginning and at the end of the trial. Before weighing, fish were fasted for 24 h.

Survival was daily checked. Dead fish were counted and weighed.

Over the trial period, the following zootechnical parameters were calculated: specific growth rate (SGR), feed consumption (Fc) and feed conversion ratio (FCR).

Only the SGR results will be reported herein, the fish growth rate being highly correlated to the feed consumption and feed conversion ratio, directly influenced by feed palatability.

All data were analyzed by one-way analysis of variance (ANOVA) followed by Fisher test. Differences were considered significant at $P<0.05$.

### 1.4. Application of PEs

#### 1.4.1. Method for preparing PEs

PEs were prepared (e.g., mixing of free amino acids, and mixing of nucleotides and hydrolysates) using the classical laboratory mixing methods for liquid and powder, that will be clear for the skilled artisan.

#### 1.4.2. Method for applying PEs

All the PEs evaluated in the trials reported herein were applied by top-coating at 2%. Top-coating (or coating) was performed in a 2-kg Forberg mixer (Forberg International, Larvik, Norway) with a speed of about 50 rpm. Fish oil was first applied at a level of 1% (duration of the application: about 30 s). Then the dry PE was dusted (powder PE) or sprayed (liquid PE) for about 60 s while mixing, and then the mixer was kept switch on for about 60s for retention.

### 1.5. DH measurement method (OPA method described in Nielsen et al, 2001)

All DH measurements were performed using the OPA method detailed hereinafter.

In protein hydrolysates, the key parameter for monitoring the reaction is the degree of hydrolysis (DH). DH is defined as the percentage of cleaved peptide bonds:

$$DH = h/h_{tot} \times 100\%$$

where $h_{tot}$ is the total number of peptide bonds per protein equivalent, and h is the number of hydrolyzed bonds. h is expressed in equivalent of serine-$NH_2$, as serine shows a response close to the average of all amino acids according to the formula:

$$h = (serineNH_2 - \beta)/\alpha \text{ meq/g of protein}$$

Most of food proteins have an average value of 125g/mol of amino acid molecular weight, that gives a $h_{tot} = 8$, can be adapted to the value of 7.6 for meat and 8.6 for fish. $\alpha$ and $\beta$ values are set at 1.00 and 0.40 for meat and fish, respectively.

**1.5.1. Principle**

Each hydrolysed peptide bond lead to a free amino group. Those amino groups react with OPA to form a yellow complex that will then be measured in spectrophotometry at 340 nm. The optical density is a function of the complex numbers.

The method consists then of measuring the h value, then the serine equivalent value of the hydrolysate and of comparing the coloring complex formed in the hydrolysates reported to the level of complex formed in a serine standard (with the correction of a blank).

**1.5.2. Apparatus**

Erlenmeyer flasks, 4-decimal analytical balance. Pipettes: adapted to the volume. Magnetic stirrer, vortex, Spectrophotometer at 340 nm.

**1.5.3. Reagents**

The OPA reagent was prepared as follows in a 200 ml flask: 7.620 g di-Na-tetraborate decahydrate and 200 mg Na-dodecyl-sulfate (SDS) were dissolved in 150 mL deionized water. The reagents have to be completely dissolved before continuing. 160 mg OPA 97% was dissolved in 4 mL ethanol. The OPA solution was then transferred quantitatively to the above-mentioned solution by rinsing with deionized water. 176 mg dithiothreitol 99% (DTT) was added to the solution by rinsing with deionized water. The solution was made up to 200 mL with deionized water.

The serine standard was prepared by dissolving 50 mg serine in 500 mL deionized water (0.9516 meqv/L).

The sample solution was prepared by dissolving 200 mg in 100 mL deionized water.

**1.5.4. Measurements**

3 ml of OPA was put in each of the 6 micro spectrotube. Then, 400 $\mu$L of water (Blank), serine standard or sample is added, and measurement done at the same + 2 minutes reacting time. For each sample, a blank, then 2 standard measurements, then 3 sample measurements were done.

Assays were realized at 20°C.

Typical absorbance readings for the standards and water blanks are 0.8 and 0.07, respectively.

**1.5.5. Determination of h and DH**

$$Serine\text{-}NH_2 = (OD_{sample} - OD_{blank}/OD_{standard} - OD_{blank}) \times 0.9516 \text{ meqv/L} \times 0.1 \times 100 / X$$
$$\times P$$

where serine-$NH_2$ = meqv serine $NH_2$/g protein; X = g sample; P = protein % in sample; 0.1 is the sample volume in liter (L). h is then: h = (serine-$NH_2$ - P) / $\alpha$ meqv/g protein, where $\alpha$ and $\beta$ are given above.

Calculation of DH: DH = h / $h_{tot} \times 100$ %.

II- <u>Results</u>

**2.1. Protein hydrolysates enhance palatability when applied to fish feed pellets**

**2.1.1.**
**a)** The objective of a first trial was to evaluate the palatability-enhancing effect of a mixture of free amino acids as a feed palatability enhancer in fish. The mixture of free amino acids was produced by acid hydrolysis of feathers followed by caustic soda neutralization, and contains all the essential and non-essential amino acids, excepted tryptophan (table 2).

Table 2. Composition of the mixture of free amino acids

| Amino acids | g/100g product |
| --- | --- |
| Lysine | 1.00 |
| Histidine | 0.77 |
| Arginine | 3.76 |
| Acide Aspartique | 4.02 |
| Threonine | 2.74 |
| Serine | 7.25 |
| Acide glutamique | 5.79 |
| Proline | 6.03 |
| Glycine | 4.44 |
| Alanine | 2.70 |
| Cystine | 0.84 |
| Valine | 3.09 |
| Methionine | 0.29 |
| Isoleucine | 2.03 |
| Leucine | 3.76 |
| Tyrosine | 0.61 |
| Phenylalanine | 2.87 |
| (+ NaCl : qsf 100g) | |

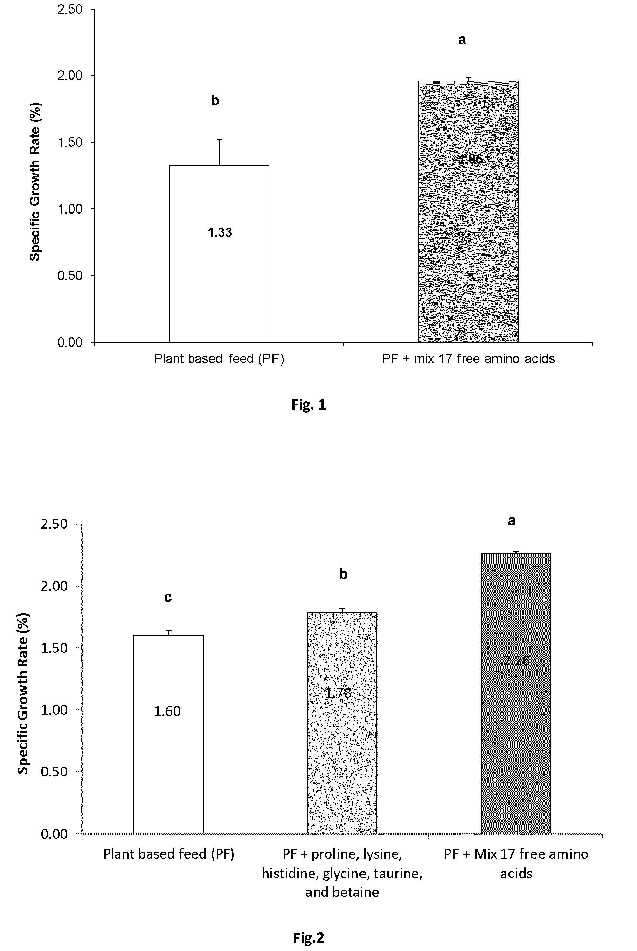

As illustrated in Fig. 1, at the end of the trial, the fish growth rate was significantly improved by the application of the mixture of 17 free amino acids by top-coating.
**b)** The objective of a second trial was to compare the palatability-enhancing effect of a mixture of six free amino acids and derivatives classically referenced in the literature (table 3; Mackie and Mitchell 1982, 1983; Dias et al., 1997; Tiril et al., 2008) to that of a mixture of the 17 free amino acids evaluated in the first trial reported above.

Table 3. Composition of the mixture of free amino acids and derivatives

| Amino acids and derivatives | % |
| --- | --- |
| Proline | 20 |
| Lysine | 10 |
| Histidine | 10 |
| Glycine | 20 |
| Taurine | 30 |
| Betaïne | 30 |

As illustrated in Fig.2, the mixture of 17 free amino acids showed significantly better palatability-enhancing results than the mixture of free amino acids and derivatives referenced in the literature as feed palatability enhancer.
**c)** To complete this study, a complementary trial was conducted to evaluate the effect of complementing a mixture of 17 free amino acids with other some amino acids and derivatives (table 4) referenced in literature (Mackie et al., 1980) as feed palatability enhancer in fish.

EP 2 895 006 B1

Table 4. Composition of the mixture of 17 free amino acids supplemented with 4 amino acids and derivatives

| Amino acids and derivatives | g/100g product |
| --- | --- |
| Lysine | 0.70 |
| Histidine | 0.54 |
| Arginine | 2.64 |
| Acide Aspartique | 2.82 |
| Threonine | 1.91 |
| Serine | 5.07 |
| Acide glutamique | 4.05 |
| Proline | 4.22 |
| Glycine | 3.11 |
| Alanine | 1.89 |
| Cystine | 0.59 |
| Valine | 2.16 |
| Methionine | 0.20 |
| Isoleucine | 1.42 |
| Leucine | 2.64 |
| Tyrosine | 0.43 |
| Phenylalanine | 2.01 |
| Taurine | 3.50 |
| Betaine | 13.00 |
| Glycine | 5.00 |
| Alanine | 8.50 |
| (+ NaCl : qsf 100g) | |

As illustrated in Fig.3, the addition of glycine, betaïne, taurine and alanine did not enhance the feed palatability when mixing to the 17 free amino acids.

d) These results showed that application by top-coating of a mixture of 17 free amino acids is efficient to enhance feed palatability at a higher level that the classical amino acids and derivatives already identified in the literature as feed palatability enhancer.

These results tend to demonstrate that, more than the nature of the amino acids or derivatives, their state (free or not) into the PE formulation is the main driver of feed palatability enhancement.

2.1.2. The objective of a trial was to show that some hydrolysates manufactured from different raw material origins (such as yeast, shrimp, squid), and having different level of hydrolysis (table 5), could increase the palatability of a plant-based feed, as well as the mixture of free amino acids evaluated previously.

Table 5. Degree of hydrolysis of the three hydrolysates evaluated as feed palatability enhancers in European seabass

| Raw material origin of the hydrolysate | Degree of hydrolysis (%) | Free amino acid level (% relative to the total amount of amino acids) |
| --- | --- | --- |
| Yeast | 61.1 | 48 |
| Squid | 20.7 | 29 |
| Shrimp | 52.5 | 52 |

As illustrated in Fig. 4, whatever their origin and their level of hydrolysis, the three hydrolysates applied by top-coating on the plant-based feed resulted in a significant gain in growth rate. These results clearly validated that hydrolysates containing free amino acids and peptides can increase significantly feed palatability when applied by top-coating.

**2.2. Protein hydrolysates combined to nucleotides lead to an improved palatability-enhancing effect when applied to fish feed pellets**

**2.2.1.** In order to evaluate the performance of a combination of protein hydrolysates and nucleotides, a commercial mixture of IMP/GMP (50/50) was mixed into a protein hydrolysate at different dosage (0%, 1%, 2.5%, 5%, 10%) and the resulting candidate palatability enhancer was applied by top-coating on a plant-based feed.

As shown in Fig. 5, at the end of the trial, the application of a hydrolysate alone allowed to increase significantly the palatability of the plant-based feed. The effect of the hydrolysate on feed palatability was significantly improved by the addition of nucleotides IMP/GMP 50/50, an IMP/GMP inclusion level of 2.5% into the hydrolysate allowing to record the best result.

The "boosting" effect of nucleotides IMP/GMP (same commercial mixture IMP/GMP 50/50 as described above) was confirmed when added to a tuna-based hydrolysate at different level (1%, 2% and 3% into the hydrolysate) (Fig. 6).

In conclusion, addition of IMP/GMP to a source of hydrolyzed protein is efficient to enhance the palatability of a fish feed. The dosage of 2.5% IMP/GMP in the hydrolysate seems to be the most efficient and has thus been considered for the other trials reported hereinafter.

**2.2.2.** Different trials were conducted to evaluate the palatability-enhancing effect of nucleotides (IMP/GMP 50/50) when mixed at 2.5% with hydrolysates from different origins: a mixture of 17 free amino acids or a marine hydrolysate from different species: tuna, tilapia, and squid (table 6; Fig. 7a, b, c, d).

Table 6. Degree of hydrolysis of the four hydrolysates evaluated in combination with nucleotides

| Raw material origin of the hydrolysate | Degree of hydrolysis (%) | Free amino acid level (% relative to the total amount of amino acids) |
|---|---|---|
| Mixture 17 free amino acids | 100 | 100 |
| Squid hydrolysate | 20.7 | 29 |
| Tuna hydrolysate | 53.0 | 55 |
| Tilapia hydrolysate | 21.9 | 21 |

As shown in Fig. 7a to d, whatever the nature of the raw materials used and the degree of hydrolysis of the hydrolysates, all the combinations "hydrolysate + nucleotides (IMP/GMP 50/50)" were efficient to significantly improve palatability of the plant-based feed.

**2.3. A source of hydrolyzed protein is indispensable to get feed palatability enhancement when nucleotides are applied**

The objective of this trial was to evaluate the palatability-enhancing effect of nucleotides (IMP/GMP 50/50) when applied by top-coating mixed with either a non-hydrolyzed raw material (yeast meal), or a hydrolyzed raw material (yeast hydrolysate), or a mixture of both. The degree of hydrolysis of the different products is indicated in table 7. The level of nucleotides (IMP/GMP 50/50) in the palatability enhancer was 2.5% in all the products.

Table 7. Degree of hydrolysis of the three hydrolysates evaluated as PEs

| Product | Degree of hydrolysis of the final PEC (%) | Free amino acid level (% relative to the total amount of amino acids) |
|---|---|---|
| Yeast meal/nucleotides | 7.8 | 5 |
| Yeast hydrolysate/nucleotides | 59.6 | 48 |
| Yeast hydrolysate/Yeast meal/nucleotides | 33.6 | 26 |

As shown in Fig. 8, the nucleotide supplementation of a yeast meal, having a low level of protein hydrolysis, did not increase feed palatability. In the opposite, as soon as the PE formula contained a hydrolysate, the fish feed palatability was significantly improved by the supplementation of nucleotides IMP/GMP.

These results gave evidence that the presence of a source of hydrolyzed protein in a palatability enhancer formulation is indispensable to get a significant improvement of the fish growth when IMP/GMP nucleotides are applied.

**2.4. Importance of the degree of hydrolysis of protein hydrolysates for improving the palatability-enhancing effect of protein hydrolysates combined to nucleotides when applied to fish feed pellets**

In order to define the minimum level of hydrolysis required to get a significant improvement of fish feed palatability when 2.5% nucleotides (IMP/GMP) are mixed with a hydrolysate, a trial was set up with some hydrolysates, produced from the same raw materials and having a range of degree of hydrolysis from 8% to 100%, giving a degree of hydrolysis of the finished PE from 7.8% to 97.5% (Fig. 9).

There was a significant improvement of the feed palatability while increasing the degree of hydrolysis of the hydrolysate contained in the PE.

As illustrated in Fig. 9, such a significant improvement was recorded from a degree of hydrolysis value of 14.5% compared to the negative control. Thus, this degree of hydrolysis value is considered as the minimum required to achieve a palatability-enhancing effect of nucleotides when mixed to a hydrolysate.

**2.5. Impact of the nature of the nucleotides on the improved palatability-enhancing effect of protein hydrolysates combined to nucleotides when applied to fish feed pellets**

The results reported above demonstrated that a mixture of IMP/GMP (50/50) increased significantly ("boosted") the palatability-enhancing effect of PEs, when combined to a hydrolysate having at least a degree of hydrolysis of 14.5%.

Complementary trials were conducted to study the effect of IMP and GMP alone (Fig. 10a), and other sources of nucleotides (AMP, UMP, CMP) (Fig. 10b), when mixed to a yeast hydrolysate, the thus obtained PEC being then applied by top-coating on a plant-based feed in European seabass.

The results illustrated in Fig. 10a showed that the inclusion of IMP alone or a mixture IMP/GMP significantly improved the plant-based feed palatability. This improvement is lower with GMP but not significantly different from that of the other sources of nucleotides.

These results confirmed that IMP and GMP give the best results when added to a hydrolysate. Moreover, CMP allowed to observe the same level of palatability improvement than IMP and GMP (Fig. 10b).

The inclusion of either UMP or AMP into the hydrolysate was not efficient to increase the feed palatability compared to the application of the hydrolysate alone (Fig. 10b). In addition, when combined to IMP, AMP did not result in a decrease of "boosting" effect compared to IMP alone, giving evidence for a neutral effect of AMP on palatability enhancement by hydrolysates (Fig. 10b).

In conclusion, IMP, GMP and CMP are the preferred nucleotides for improving ("boosting") the palatability-enhancing effect of hydrolysates. Interestingly, these three nucleotides could be combined so that an additive palatability-enhancement effect could be expected.

**2.6. Combinations of protein hydrolysates and nucleotides lead to an improved palatability enhancing effect when applied to fish feed pellets in omnivorous species.**

Two combinations of protein hydrolysates and nucleotides (at different levels: i.e. 0.07% and 0.7 % of IMP/GMP) were considered for evaluating their performances in a low fish meal feed formulated for the omnivorous tilapia *(Oreochromis niloticus).*

As demonstrated for the carnivorous European seabass, combinations of protein hydrolysates and nucleotides were efficient to significantly improved palatability of the plant based feed in omnivorous tilapia ($p < 0.05$) (Fig. 11). However, the difference of performance between the two feeds is less important than for seabass, highlighting the high tolerance of the omnivorous tilapia to high dietary plant inclusion.

REFERENCES

Altan et al., 2011. Turkish Journal of Fisheries and Aquatic Sciences 11:87-92.

A.O.A.C. 1995. Official methods of analysis. 16th ed., Ch. 12 Horowitz, Washington, DC, pp 7-9

Boisen, CAB International, 1991, p.135-145,

Dias J, Gomes E. and S.J. Kaushik, 1997. Improvement of feed intake through supplementation with an attractant mix in European sea bass fed plant protein rich feeds. Aquat. Living Resour., 10:385-389.

Dong D, Jones G, Zhang S. 2009. Dynamic evolution of bitter taste receptor genes in vertebrates. BMC Evol Biol. 9:12.

Friedman M. 1989 . Absorption and Utilization of Amino Acids, Vol 3. Taylor & Francis 336p.

Grosvenor W, Feigin AM, Spielman Al, Finger TE, Wood MR, Hansen A, Kalinoski DL, Teeter JH, Brand JG. 1998. The arginine taste receptor. Physiology, biochemistry, and immunohistochemistry. Ann N Y Acad Sci. 855:134-42.González-Félix ML, Castillo-Yañez FJOcaño-Higuera VM, Perez-Velazquez M, Cota-Moreno V, Lozano-Taylor J. 2009. Effect of dietary protein source and time on alkaline proteolytic activity of Nile tilapia (Oreochromis niloticus). Fish Physiol Biochem. 36 (3):779-85

Guillaume et al. September 2001. Nutrition and Feeding of Fish and Crustaceans. Springer Praxis (UK).

Hung et al. 1984. J. Food Sci. 49:1535-1542

Hara TJ. 1994 Olfaction and gustation in fish: an overview. Acta Physiol Scand.152(2):207-17.

Ishimaru Y, Okada S, Naito H, Nagai T, Yasuoka A, Matsumoto I, Abe K. 2005. Two families of candidate taste receptors in fishes. Mech Dev. 122(12):1310-21. Kasumyan A.O., Døving K.B. 2003. Taste preferences in fishes. Fish and Fisheries 4, 289-347.

Mackie, A. M., J. W. Adron, and P. T. Grant. 1980. Chemical nature of feeding stimulants for the juvenile sole, Solea solea (L.). J. Fish Biol. 16: 701-708.

Mackie, A.M. and Mitchell, A.I. 1982. Chemical ecology and chemoreception in the marine environment. In "Indices Biochimique et milieux marins" (Journees du GABIN, Brest, 18-20 Nov. 1981). Publ. CMEXO (Actes Collon.) 14, 11-24.

Mackie, A.M. and Mitchell, A.I. 1983. Studies on the chemical nature of feeding stimulants for the juvenile European eel, Anguilla anguilia (L.). J. Fish Biol. 22, 425-430.

Nielsen et al. 2001. J. Food Sci. 66:642-646

Oike H, Nagai T, Furuyama A, Okada S, Aihara Y, Ishimaru Y, Marui T, Matsumoto I, Misaka T, Abe K. 2007. Characterization of ligands for fish taste receptors. J Neurosci. 27(21):5584-92.

Plakas SM, Lee TC, Wolke RE, Meade TL. 1985. Effect of Maillard browning reaction on protein utilization and plasma amino acid response by rainbow trout (Salmo gairdneri). J Nutr. 115(12):1589-99.

Silvestre. 1997. Food Chem. 60:263-273Tiril,S.U., Alagil F., Yagci F. B., and Aral O. 2008. Effects of Betaine Supplementation in Plant Protein Based Diets on Feed Intake and Growth Performance in Rainbow Trout (Oncorhynchus mykiss). The Israeli Journal of Aquaculture 60(1), 57-64.

## Claims

1. A method for preparing carnivorous fish feed pellets having enhanced palatability, comprising:

   a) providing a palatability-enhancing composition comprising:

      - a protein hydrolysate having a degree of hydrolysis (DH) from 14.5 to 100% and containing at least 17 different free amino acids, combined to
      - one or more nucleotides selected from inosine monophosphate, guanosine monophosphate, cytidine monophosphate, and combinations thereof, and
      - optionally, in the presence of one or more additional palatability-enhancing composition ingredients;

   b) applying said palatability-enhancing composition to carnivorous fish feed pellets; and
   c) recovering said carnivorous fish feed pellets having enhanced palatability.

2. A method for enhancing the palatability of carnivorous fish feed pellets, comprising:

  a) applying to said carnivorous fish feed pellets a palatability-enhancing composition comprising:

    - a protein hydrolysate having a degree of hydrolysis (DH) from 14.5 to 100% and containing at least 17 different free amino acids, combined to
    - one or more nucleotides selected from inosine monophosphate, guanosine monophosphate, cytidine monophosphate, and combinations thereof, and
    - optionally, in the presence of one or more additional palatability-enhancing composition ingredients.

3. The method according to claim 1 or 2, wherein said palatability-enhancing composition has a degree of hydrolysis (DH) from 14.5 to 100%.

4. The method according to any one of claims 1 to 3, wherein said at least 17 different free amino acids are natural amino acids.

5. The method according to anyone of claims 1 to 4, wherein said protein hydrolysate is present in an amount from 14.5 to 100% by weight in said palatability-enhancing composition.

6. The method according to anyone of claims 1 to 5, wherein said one or more nucleotides are present in an amount from about 0.1 to about 25% by weight in said palatability-enhancing composition.

7. The method according to anyone of claims 1 to 6, wherein said palatability-enhancing composition is applied to carnivorous fish feed pellets by inclusion or by coating.

8. A method for enhancing the palatability of carnivorous fish feed pellets containing a protein hydrolysate, comprising:

  a) applying one or more nucleotides selected from inosine monophosphate, guanosine monophosphate, cytidine monophosphate, and combinations thereof, to said carnivorous fish feed pellets containing said protein hydrolysate, wherein said protein hydrolysate has a degree of hydrolysis (DH) from 14.5 to 100% and contains at least 17 different free amino acids.

9. A method for enhancing the palatability effect of a protein hydrolysate to be applied to carnivorous fish feed pellets, comprising:

  a) combining said protein hydrolysate to one or more nucleotides selected from inosine monophosphate, guanosine monophosphate, cytidine monophosphate, and combinations thereof, wherein said protein hydrolysate has a degree of hydrolysis (DH) from 14.5 to 100% and contains at least 17 different free amino acids.

10. A method for feeding carnivorous fish, comprising:

  a) feeding carnivorous fish feed pellets to carnivorous fish, wherein said pellets comprise a protein hydrolysate combined to one or more nucleotides selected from inosine monophosphate, guanosine monophosphate, cytidine monophosphate, and combinations thereof, wherein said protein hydrolysate has a degree of hydrolysis (DH) from 14.5 to 100% and contains at least 17 different free amino acids.

11. Use of one or more nucleotides selected from inosine monophosphate, guanosine monophosphate, cytidine monophosphate, and combinations thereof, for enhancing the palatability effect of a protein hydrolysate contained in carnivorous fish feed pellets, wherein said protein hydrolysate has a degree of hydrolysis (DH) from 14.5 to 100% and contains at least 17 different free amino acids.

12. Use of one or more nucleotides selected from inosine monophosphate, guanosine monophosphate, cytidine monophosphate, and combinations thereof, for enhancing the palatability effect of a protein hydrolysate contained in a carnivorous fish feed pellet palatability-enhancing composition, wherein said protein hydrolysate has a degree of hydrolysis (DH) from 14.5 to 100% and contains at least 17 different free amino acids.

13. The use according to claim 12, wherein said palatability-enhancing composition has a degree of hydrolysis (DH) from 14.5 to 100%.

**14.** A method for preparing a carnivorous fish feed pellet palatability-enhancing composition, comprising:

a) providing one or more protein hydrolysates having a degree of hydrolysis (DH) from 14.5 to 100% and containing at least 17 different free amino acids;
b) providing one or more nucleotides selected from inosine monophosphate, guanosine monophosphate, cytidine monophosphate, and combinations thereof;
c) optionally, providing one or more additional carnivorous fish feed pellet palatability-enhancing composition ingredients;
d) combining said one or more protein hydrolysates and said one or more nucleotides and, optionally, said one or more additional ingredients; and
e) obtaining said carnivorous fish feed pellet palatability-enhancing composition.

**Patentansprüche**

**1.** Verfahren zur Herstellung von Futterpellets für fleischfressende Fische mit verbesserter Schmackhaftigkeit, wobei das Verfahren Folgendes umfasst:

a) Bereitstellen einer die Schmackhaftigkeit verbessernden Zusammensetzung, die Folgendes umfasst:

- ein Proteinhydrolysat, das einen Hydrolysegrad (HG) von 14,5 bis 100 % aufweist und mindestens 17 unterschiedliche freie Aminosäuren enthält, kombiniert zu
- einem oder mehreren Nukleotiden, die aus Inosinmonophosphat, Guanosinmonophosphat, Cytidinmonophosphat und Kombinationen davon ausgewählt sind, und
- gegebenenfalls in Gegenwart von einem oder mehreren zusätzlichen die Schmackhaftigkeit verbessernden Zusammensetzungsbestandteilen;

b) Anwenden der besagten die Schmackhaftigkeit verbessernden Zusammensetzung auf Futterpellets für fleischfressende Fische und
c) Gewinnen der besagten Futterpellets für fleischfressende Fische mit verbesserter Schmackhaftigkeit.

**2.** Verfahren zur Verbesserung der Schmackhaftigkeit von Futterpellets für fleischfressende Fische, wobei das Verfahren Folgendes umfasst:

a) Anwenden einer die Schmackhaftigkeit verbessernden Zusammensetzung auf die besagten Futterpellets für fleischfressende Fische, wobei die Zusammensetzung Folgendes umfasst:

- ein Proteinhydrolysat, das einen Hydrolysegrad (HG) von 14,5 bis 100 % aufweist und mindestens 17 unterschiedliche freie Aminosäuren enthält, kombiniert zu
- einem oder mehreren Nukleotiden, die aus Inosinmonophosphat, Guanosinmonophosphat, Cytidinmonophosphat und Kombinationen davon ausgewählt sind, und
- gegebenenfalls in Gegenwart von einem oder mehreren zusätzlichen die Schmackhaftigkeit verbessernden Zusammensetzungsbestandteilen.

**3.** Verfahren nach Anspruch 1 oder 2, wobei die besagte die Schmackhaftigkeit verbessernde Zusammensetzung einen Hydrolysegrad (HG) von 14,5 bis 100 % aufweist.

**4.** Verfahren nach einem der Ansprüche 1 bis 3, wobei die besagten mindestens 17 unterschiedlichen freien Aminosäuren natürliche Aminosäuren sind.

**5.** Verfahren nach einem der Ansprüche 1 bis 4, wobei das besagte Proteinhydrolysat in einer Menge von 14,5 bis 100 Gew.-% in der besagten die Schmackhaftigkeit verbessernden Zusammensetzung vorliegt.

**6.** Verfahren nach einem der Ansprüche 1 bis 5, wobei das besagte eine oder die besagten mehreren Nukleotide in einer Menge von etwa 0,1 bis etwa 25 Gew.-% in der besagten die Schmackhaftigkeit verbessernden Zusammensetzung vorliegen.

**7.** Verfahren nach einem der Ansprüche 1 bis 6, wobei die besagte die Schmackhaftigkeit verbessernde Zusammensetzung durch Einbindung oder durch Beschichtung auf die Futterpellets für fleischfressende Fische angewendet wird.

8. Verfahren zur Verbesserung der Schmackhaftigkeit von Futterpellets für fleischfressende Fische, die ein Proteinhydrolysat enthalten, wobei das Verfahren Folgendes umfasst:

   a) Anwenden eines oder mehrerer Nukleotide, die aus Inosinmonophosphat, Guanosinmonophosphat, Cytidinmonophosphat und Kombinationen davon ausgewählt sind, auf die besagten Futterpellets für fleischfressende Fische, die das besagte Proteinhydrolysat enthalten, wobei das besagte Proteinhydrolysat einen Hydrolysegrad (HG) von 14,5 bis 100 % aufweist und mindestens 17 unterschiedliche freie Aminosäuren enthält.

9. Verfahren zur Verbesserung des Schmackhaftigkeitseffekts eines Proteinhydrolysats, das auf Futterpellets für fleischfressende Fische angewendet werden soll, wobei das Verfahren Folgendes umfasst:

   a) Kombinieren des besagten Proteinhydrolysats mit einem oder mehreren Nukleotiden, die aus Inosinmonophosphat, Guanosinmonophosphat, Cytidinmonophosphat und Kombinationen davon ausgewählt sind, wobei das besagte Proteinhydrolysat einen Hydrolysegrad (HG) von 14,5 bis 100 % aufweist und mindestens 17 unterschiedliche freie Aminosäuren enthält.

10. Verfahren zur Fütterung von fleischfressenden Fischen, wobei das Verfahren Folgendes umfasst:

    a) Füttern von Futterpellets für fleischfressende Fische an fleischfressende Fische, wobei die besagten Pellets ein Proteinhydrolysat umfassen, kombiniert zu einem oder mehreren Nukleotiden, die aus Inosinmonophosphat, Guanosinmonophosphat, Cytidinmonophosphat und Kombinationen davon ausgewählt sind, wobei das besagte Proteinhydrolysat einen Hydrolysegrad (HG) von 14,5 bis 100 % aufweist und mindestens 17 unterschiedliche freie Aminosäuren enthält.

11. Verwendung eines oder mehrerer Nukleotide, die aus Inosinmonophosphat, Guanosinmonophosphat, Cytidinmonophosphat und Kombinationen davon ausgewählt sind, zur Verbesserung des Schmackhaftigkeitseffekts eines Proteinhydrolysats, das in Futterpellets für fleischfressende Fische enthalten ist, wobei das besagte Proteinhydrolysat einen Hydrolysegrad (HG) von 14,5 bis 100 % aufweist und mindestens 17 unterschiedliche freie Aminosäuren enthält.

12. Verwendung eines oder mehrerer Nukleotide, die aus Inosinmonophosphat, Guanosinmonophosphat, Cytidinmonophosphat und Kombinationen davon ausgewählt sind, zur Verbesserung des Schmackhaftigkeitseffekts eines Proteinhydrolysats, das in einer die Schmackhaftigkeit verbessernden Zusammensetzung für Futterpellets für fleischfressende Fische enthalten ist, wobei das besagte Proteinhydrolysat einen Hydrolysegrad (HG) von 14,5 bis 100 % aufweist und mindestens 17 unterschiedliche freie Aminosäuren enthält.

13. Verwendung nach Anspruch 12, wobei die besagte die Schmackhaftigkeit verbessernde Zusammensetzung einen Hydrolysegrad (HG) von 14,5 bis 100 % aufweist.

14. Verfahren zur Herstellung einer die Schmackhaftigkeit verbessernden Zusammensetzung für Futterpellets für fleischfressende Fische, wobei das Verfahren Folgendes umfasst:

    a) Bereitstellen eines oder mehrerer Proteinhydrolysate, die einen Hydrolysegrad (HG) von 14,5 bis 100 % aufweisen und mindestens 17 unterschiedliche freie Aminosäuren enthalten;
    b) Bereitstellen eines oder mehrerer Nukleotide, die aus Inosinmonophosphat, Guanosinmonophosphat, Cytidinmonophosphat und Kombinationen davon ausgewählt sind;
    c) gegebenenfalls Bereitstellen eines oder mehrerer zusätzlicher die Schmackhaftigkeit verbessernder Zusammensetzungsbestandteile;
    d) Kombinieren des besagten einen oder der besagten mehreren Proteinhydrolysate und des besagten einen oder der besagten mehreren Nukleotide und gegebenenfalls des besagten einen oder der besagten mehreren zusätzlichen Bestandteile und
    e) Erhalten der besagten die Schmackhaftigkeit verbessernden Zusammensetzung für Futterpellets für fleischfressende Fische.

**Revendications**

1. Méthode de préparation de granulés alimentaires pour poisson carnivore présentant une appétence améliorée, comprenant :

   a) la fourniture d'une composition améliorant l'appétence comprenant :

   - un hydrolysat de protéine présentant un degré d'hydrolyse (DH) de 14,5 à 100 % et contenant au moins 17 acides aminés libres différents, combiné avec
   - un ou plusieurs nucléotides sélectionnés parmi le monophosphate d'inosine, le monophosphate de guanosine, le monophosphate de cytidine et leurs combinaisons, et
   - facultativement, en présence d'un ou plusieurs ingrédients supplémentaires de composition améliorant l'appétence ;

   b) l'application de ladite composition améliorant l'appétence sur des granulés alimentaires pour poisson carnivore ; et
   c) la récupération desdits granulés alimentaires pour poisson carnivore présentant une appétence améliorée.

2. Méthode d'amélioration de l'appétence de granulés alimentaires pour poisson carnivore, comprenant :

   a) l'application sur lesdits granulés alimentaires pour poisson carnivore d'une composition améliorant l'appétence comprenant :

   - un hydrolysat de protéine présentant un degré d'hydrolyse (DH) de 14,5 à 100 % et contenant au moins 17 acides aminés libres différents, combiné avec
   - un ou plusieurs nucléotides sélectionnés parmi le monophosphate d'inosine, le monophosphate de guanosine, le monophosphate de cytidine et leurs combinaisons, et
   - facultativement, en présence d'un ou plusieurs ingrédients supplémentaires de composition améliorant l'appétence.

3. Méthode selon la revendication 1 ou 2, dans laquelle ladite composition améliorant l'appétence présente un degré d'hydrolyse (DH) de 14,5 à 100 %.

4. Méthode selon l'une quelconque des revendications 1 à 3, dans laquelle lesdits au moins 17 acides aminés libres différents sont des acides aminés naturels.

5. Méthode selon l'une quelconque des revendications 1 à 4, dans laquelle ledit hydrolysat de protéine est présent en une quantité de 14,5 à 100 % en poids dans ladite composition améliorant l'appétence.

6. Méthode selon l'une quelconque des revendications 1 à 5, dans laquelle lesdits un ou plusieurs nucléotides sont présents en une quantité d'environ 0,1 à environ 25 % en poids dans ladite composition améliorant l'appétence.

7. Méthode selon l'une quelconque des revendications 1 à 6, dans laquelle ladite composition améliorant l'appétence est appliquée sur les granulés alimentaires pour poisson carnivore par inclusion ou par revêtement.

8. Méthode d'amélioration de l'appétence de granulés alimentaires pour poisson carnivore contenant un hydrolysat de protéine, comprenant :

   a) l'application d'un ou de plusieurs nucléotides sélectionnés parmi le monophosphate d'inosine, le monophosphate de guanosine, le monophosphate de cytidine et leurs combinaisons, sur lesdits granulés alimentaires pour poisson carnivore contenant ledit hydrolysat de protéine, dans laquelle ledit hydrolysat de protéine présente un degré d'hydrolyse (DH) de 14,5 à 100 % et contient au moins 17 acides aminés libres différents.

9. Méthode d'amélioration de l'effet l'appétence d'un hydrolysat de protéine à appliquer sur des granulés alimentaires pour poisson carnivore, comprenant :

   a) la combinaison dudit hydrolysat de protéine avec un ou plusieurs nucléotides sélectionnés parmi le monophosphate d'inosine, le monophosphate de guanosine, le monophosphate de cytidine et leurs combinaisons, dans laquelle ledit hydrolysat de protéine présente un degré d'hydrolyse (DH) de 14,5 à 100 % et contient au moins 17 acides aminés libres différents.

10. Méthode d'alimentation d'un poisson carnivore, comprenant :

a) le fait de nourrir le poisson carnivore avec des granulés alimentaires pour poisson carnivore, dans laquelle lesdits granulés comprennent un hydrolysat de protéine combiné avec un ou plusieurs nucléotides sélectionnés parmi le monophosphate d'inosine, le monophosphate de guanosine, le monophosphate de cytidine et leurs combinaisons, dans laquelle ledit hydrolysat de protéine présente un degré d'hydrolyse (DH) de 14,5 à 100 % et contient au moins 17 acides aminés libres différents.

11. Utilisation d'un ou de plusieurs nucléotides sélectionnés parmi le monophosphate d'inosine, le monophosphate de guanosine, le monophosphate de cytidine et leurs combinaisons, pour améliorer l'effet d'appétence d'un hydrolysat de protéine contenu dans des granulés alimentaires pour poisson carnivore, dans laquelle ledit hydrolysat de protéine présente un degré d'hydrolyse (DH) de 14,5 à 100 % et contient au moins 17 acides aminés libres différents.

12. Utilisation d'un ou de plusieurs nucléotides sélectionnés parmi le monophosphate d'inosine, le monophosphate de guanosine, le monophosphate de cytidine et leurs combinaisons, pour améliorer l'effet d'appétence d'un hydrolysat de protéine contenu dans une composition améliorant l'appétence de granulés alimentaires pour poisson carnivore, dans laquelle ledit hydrolysat de protéine présente un degré d'hydrolyse (DH) de 14,5 à 100 % et contient au moins 17 acides aminés libres différents.

13. Utilisation selon la revendication 12, dans laquelle ladite composition améliorant l'appétence présente un degré d'hydrolyse (DH) de 14,5 à 100 %.

14. Méthode de préparation d'une composition améliorant l'appétence de granulés alimentaires pour poisson carnivore, comprenant :

a) la fourniture d'un ou de plusieurs hydrolysats de protéine présentant un degré d'hydrolyse (DH) de 14,5 à 100 % et contenant au moins 17 acides aminés libres différents ;
b) la fourniture d'un ou de plusieurs nucléotides sélectionnés parmi le monophosphate d'inosine, le monophosphate de guanosine, le monophosphate de cytidine et leurs combinaisons ;
c) facultativement, la fourniture d'un ou de plusieurs ingrédients supplémentaires de composition améliorant l'appétence de granulés alimentaires pour poisson carnivore ;
d) la combinaison desdits un ou plusieurs hydrolysats de protéines et desdits un ou plusieurs nucléotides et, facultativement, desdits un ou plusieurs ingrédients supplémentaires ; et
e) l'obtention de ladite composition améliorant l'appétence de granulés alimentaires pour poisson carnivore.

Fig. 1

Fig.2

Fig.3

Fig. 4

**Fig. 5**

**Fig. 6**

**Fig. 7a**

**Fig. 7b**

**Fig. 7c**

**Fig. 7d**

Fig. 8

Fig. 9

Fig. 10a

Fig. 10b

Fig. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7687091 B2
- EP 11306453 A

### Non-patent literature cited in the description

- **KUBITZA.** *Aquaculture,* 1997, vol. 148, 191-200
- **ALTAN et al.** *Turkish Journal of Fisheries and Aquatic Sciences,* 2011, vol. 11, 87-92
- Official methods of analysis. 1995, vol. 12, 7-9
- **BOISEN.** *CAB International,* 1991, 135-145
- **DIAS J ; GOMES E. ; S.J. KAUSHIK.** Improvement of feed intake through supplementation with an attractant mix in European sea bass fed plant protein rich feeds. *Aquat. Living Resour.,* 1997, vol. 10, 385-389
- **DONG D ; JONES G ; ZHANG S.** Dynamic evolution of bitter taste receptor genes in vertebrates. *BMC Evol Biol,* 2009, vol. 9, 12
- **FRIEDMAN M.** Absorption and Utilization of Amino Acids. Taylor & Francis, 1989, vol. 3, 336
- **GROSVENOR W ; FEIGIN AM ; SPIELMAN AL ; FINGER TE ; WOOD MR ; HANSEN A ; KALINOSKI DL ; TEETER JH ; BRAND JG.** The arginine taste receptor. Physiology, biochemistry, and immunohistochemistry. *Ann N Y Acad Sci.,* 1998, vol. 855, 134-42
- **GONZÁLEZ-FÉLIX ML ; CASTILLO-YAÑEZ FJO-CAÑO-HIGUERA VM ; PEREZ-VELAZQUEZ M ; COTA-MORENO V ; LOZANO-TAYLOR J.** Effect of dietary protein source and time on alkaline proteolytic activity of Nile tilapia (Oreochromis niloticus). *Fish Physiol Biochem.,* 2009, vol. 36 (3), 779-85
- **GUILLAUME et al.** Nutrition and Feeding of Fish and Crustaceans. Springer Praxis (UK), September 2001
- **HUNG et al.** *J. Food Sci.,* 1984, vol. 49, 1535-1542
- **HARA TJ.** Olfaction and gustation in fish: an overview. *Acta Physiol Scand,* 1994, vol. 152 (2), 207-17
- **ISHIMARU Y ; OKADA S ; NAITO H ; NAGAI T ; YASUOKA A ; MATSUMOTO I ; ABE K.** Two families of candidate taste receptors in fishes. *Mech Dev.,* 2005, vol. 122 (12), 1310-21
- **KASUMYAN A.O. ; DØVING K.B.** *Taste preferences in fishes. Fish and Fisheries,* 2003, vol. 4, 289-347
- **MACKIE, A. M. ; J. W. ADRON ; P. T. GRANT.** Chemical nature of feeding stimulants for the juvenile sole. *Solea solea (L.). J. Fish Biol.,* 1980, vol. 16, 701-708
- Chemical ecology and chemoreception in the marine environment. **MACKIE, A.M. ; MITCHELL, A.I.** Indices Biochimique et milieux marins. Publ. CMEXO (Actes Collon.), 1982, vol. 14, 11-24
- **MACKIE, A.M. ; MITCHELL, A.I.** Studies on the chemical nature of feeding stimulants for the juvenile European eel. *Anguilla anguilia (L.). J. Fish Biol.,* 1983, vol. 22, 425-430
- **NIELSEN et al.** *J. Food Sci.,* 2001, vol. 66, 642-646
- **OIKE H ; NAGAI T ; FURUYAMA A ; OKADA S ; AIHARA Y ; ISHIMARU Y ; MARUI T ; MATSUMOTO I ; MISAKA T ; ABE K.** Characterization of ligands for fish taste receptors. *J Neurosci.,* 2007, vol. 27 (21), 5584-92
- **PLAKAS SM ; LEE TC ; WOLKE RE ; MEADE TL.** Effect of Maillard browning reaction on protein utilization and plasma amino acid response by rainbow trout (Salmo gairdneri). *J Nutr.,* 1985, vol. 115 (12), 1589-99
- **SILVESTRE.** *Food Chem.,* 1997, vol. 60, 263-273
- **TIRIL,S.U. ; ALAGIL F. ; YAGCI F. B. ; ARAL O.** Effects of Betaine Supplementation in Plant Protein Based Diets on Feed Intake and Growth Performance in Rainbow Trout (Oncorhynchus mykiss). *The Israeli Journal of Aquaculture,* 2008, vol. 60 (1), 57-64